# FASCICULE DE BREVET EUROPEEN

(11) **EP 2 105 940 B1**
(45) Date de publication et mention de la délivrance du brevet: **27.06.2012**
(21) Numéro de dépôt: 09156102.7
(22) Date de dépôt: 25.03.2009
(51) Int. Cl.: H01H 50/00

(54) **Nano-commutateur magnetique bistable**
Bistabiler magnetischer Nano-Schalter
Bistable magnetic nano-switch

(30) Priorité: 28.03.2008 FR 0852061
(43) Date de publication de la demande: 30.09.2009
(73) Titulaire: Commissariat à l'Énergie Atomique et aux Énergies Alternatives, 75015 Paris (FR)
(72) Inventeur: Bilhaut, Lise, 38000, GRENOBLE (FR); Andreucci, Philippe, 38430 Moirans (FR); Duraffourg, Laurent, 38500, VOIRON (FR); Viala, Bernard, 38360, SASSENAGE (FR)
(74) Mandataire: Ilgart, Jean-Christophe

(56) Documents cités:
- US-A1- 2002 153 583
- US-A1- 2007 057 278

## Description

### DOMAINE TECHNIQUE ET ART ANTÉRIEUR

L'invention concerne le domaine des nano-commutateurs bistables.

Les dimensions typiques d'un nano-commutateur correspondent à une longueur de quelques micromètres (par exemple comprise entre 1 µm et 10µm, par exemple 5 µm) pour une section d'une centaine de nanomètres sur quelques dizaines de nm (par exemple comprise entre 100 nm et 500 nm x 10 nm et 100 nm). Le gap (c'est-à-dire à la distance séparant la partie mobile de la partie fixe du commutateur) est typiquement de l'ordre de plusieurs dizaines de nanomètres (par exemple compris entre 10 nm et 500 nm, par exemple égal à 50 nm).

On connaît un certain nombre de réalisations de nano-commutateurs, tous actionnés par la force électrostatique.

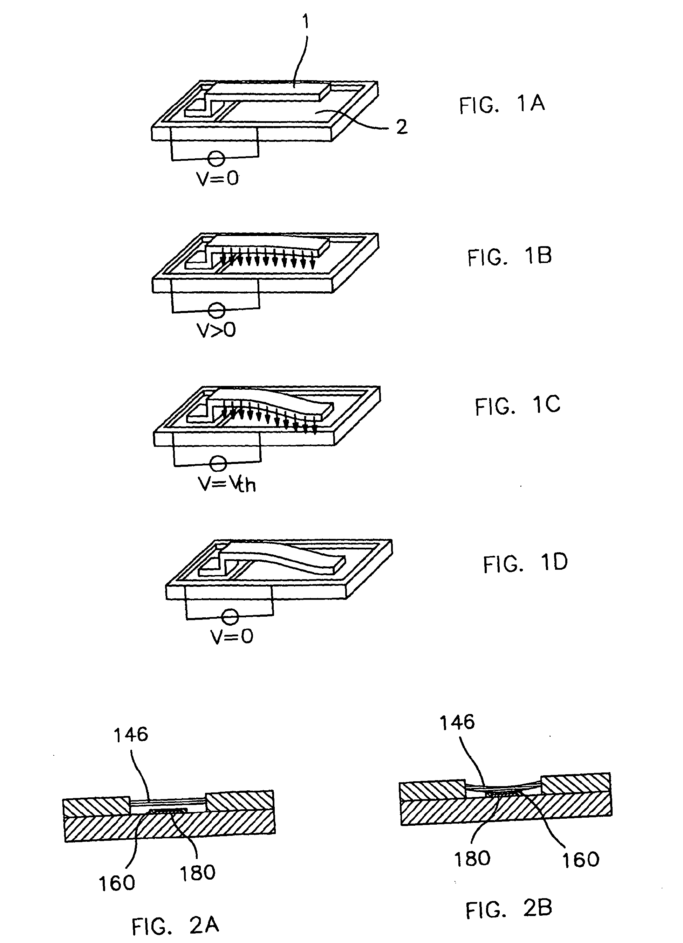

On connaît notamment la technologie, basée sur le silicium, de Cavendidish Kinetics, décrite sur le site http://www.cavendish-kinetics.com/. Cette technologie utilise une poutre submicrométrique 1 actionnée électrostatiquement, comme illustré sur les figures 1A-1D.

La poutre 1 est située, en position de repos, parallèlement à une surface conductrice 2. Il est possible de porter chacun de ces éléments à une tension propre, et donc d'établir entre eux une différence de potentiel souhaitée.

Ainsi, en figure 1A, la poutre 1 est au repos mécanique, la différence de tension entre celle-ci et le substrat conducteur 2 étant nulle. Dans cette position ouverte, le système est stable.

En figure 1B, la différence de tension entre ces deux éléments s'accroît, une force attractive (électrostatique) s'applique donc sur la poutre, cette force tend à ramener cette dernière vers le substrat 2.

Au-delà d'une certaine valeur limite Vth de tension la poutre est amenée contre le substrat 2 et le commutateur est donc en position fermée (figure 1C).

La tension peut être ramenée à zéro, le commutateur reste fermé du fait des forces d'adhésion sur le substrat 2 (figure 1D). Par conséquent, une fois la force d'actionnement disparue, les forces de surface sont suffisantes pour maintenir la structure en position fermée. Le décollement de la structure ne peut donc se faire qu'au moyen d'une autre force d'actionnement, qui va la tirer vers sa position d'équilibre initial.

Il est possible d'intégrer ce type de nano-commutateur avec une électronique CMOS et une programmation utilisant la tension native de ce CMOS, comme décrit dans l'article de M. A. Beunder et al., « A New Embedded NVM Technology for Low-Power, High Temperature, Rad-Hard Applications », paru dans NonVolatile Memory Technology Symposium 2005, IEEE, pp 65-68, 2005

L'inconvénient du système d'actionnement de cette structure est qu'elle n'est pas intrinsèquement bistable, mais qu'elle utilise les forces d'adhésion afin de rester en position commutée. Les forces d'adhésion sont encore mal connues et mal contrôlées, ce qui met en péril la reproductibilité et la fiabilité du système.

Jusqu'à présent, le seul moyen d'avoir une bistabilité non volatile est d'atteindre un équilibre entre une force de rappel élastique et une force attractive de type Van der Waals comme décrit dans l'article de K.J. Ziegler et al., intitulé « Bistable Nanoelectromechanical Devices, Appl. Phys. Lett., Vol 84, No 20, pp 4074-4076, 2004 ».

On connaît également plusieurs réalisations de nano-commutateurs à base de nanotubes de carbone. Diverses techniques de fabrication permettent de pallier à la difficulté de positionner les nanotubes aux endroits voulus. Il y a par exemple l'utilisation de traitements chimiques de surfaces comme décrit dans l'article de E. Dujardin et al. intitulé « Self-assembled switches based on electroactuated multiwalled nanotubes », Appl. Phys. Lett., Vol 87, 193107, 2005. On connaît aussi la mise en oeuvre d'un tissu de nanotubes.

Plusieurs architectures de tels commutateurs existent dont une, dite horizontale, dans laquelle les nanotubes sont parallèles à un substrat, et dont la bistabilité provient, comme précédemment, de l'équilibre entre les forces de Van der Waals et les forces élastiques, et où l'actionnement est réalisé grâce à la force électrostatique. On peut à ce sujet se reporter à l'article de T. Rueckes et al., intitulé Carbon Nanotube-Based Nonvolatile Random Access Memory for Molecular Computing, paru dans Science, Vol 289, pp 94-97, 2000.

Le document US 2006/0139842 décrit un nano-commutateur à base de nanotubes, à fonctionnement capacitif, en configuration série aussi bien qu'en configuration parallèle. Il est illustré sur les figures 2A et 2B et met en oeuvre un ou plusieurs nanotubes 146 qui peuvent être défléchis électrostatiquement, de manière à entrer en contact avec un diélectrique 180 qui se trouve sur la ligne de transmission 160 (ce diélectrique peut également être déposé sur les nanotubes). La question du décollement de la structure n'est pas évoquée dans ce document.

L'inconvénient des systèmes utilisant les nanotubes de carbone est que la production, le positionnement ainsi que la reproductibilité des caractéristiques physiques des nanotubes ne sont pas encore contrôlés pleinement à l'échelle industrielle.

Les structures de nano-commutateurs existant sont toutes basées sur un actionnement électrostatique. La bistabilité non volatile exhibée par ces nano-commutateurs est assurée uniquement par un compromis entre les forces d'adhésion du commutateur à la surface et la force de rappel mécanique, qui tend à ramener la partie mobile à sa position initiale. Cette bistabilité n'est donc pas intrinsèque au système d'actionnement car le décollement de la structure mobile n'est pas immédiat, il doit se faire au moyen d'une force d'actionnement inverse (par exemple avec une électrode en regard).

De plus, les forces de contact qui permettent au commutateur de rester en position fermée sont encore mal connues, et mal contrôlées lors de la fabrication, compromettant la reproductibilité et la fiabilité du système.

Un actionnement intrinsèquement bistable et non volatil est basé sur l'alignement d'un moment magnétique dans une induction : une partie mobile aimantée tend à s'aligner le long des lignes de champ de l'induction permanente dans laquelle elle est plongée. Plusieurs micro-actionneurs ont été fabriqués sur ce principe, comme décrit dans les articles « Micromachined Magnetic Actuators Using Electroplated Permalloy », de Chang Liu, et Yong W. Yi, paru dans IEEE Transaction on Magnetics, Vol 35, No 3, pp 1976-1985, 1999, ou « Latching microelectromagnetic relays » de M. Ruan et al., Sensors and Actuators A, Vol 91, pp 346-350, 2001.

Les dimensions latérales de ces systèmes restent toutes de l'ordre de la centaine de micromètres. Les aimants permanents assurant le fonctionnement de ces commutateurs sont en général rapportés manuellement et sont rarement intégrés au cours du procédé de fabrication du système. Dans tous les cas, leurs épaisseurs - supérieures à 10 µm - ne sont pas compatibles avec les nano-commutateurs.

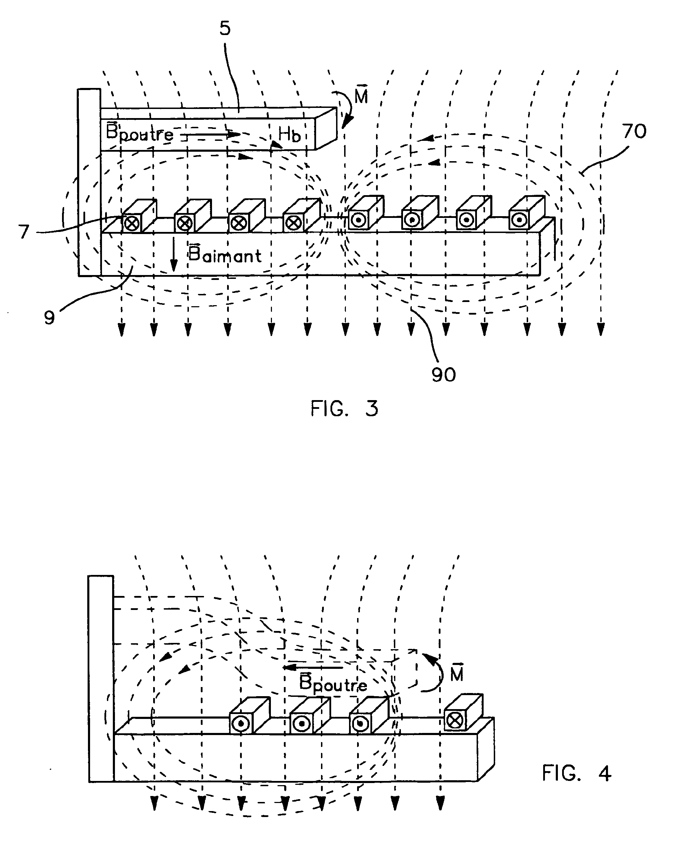

Le principe de l'actionnement par alignement du moment magnétique va être décrit en liaison avec les figures 3 et 4.

Une poutre 5, en matériau ferromagnétique doux (e.g. permalloy Ni₈₀Fe₂₀), est placée au-dessus d'une moitié de bobine planaire 7. Celle-ci, placée sur un aimant permanent 9, génère un champ magnétique Hb dont la direction principale au niveau de la poutre 5 est parallèle au substrat et dont le sens dépend du sens du courant la parcourant. L'aimant permanent 9 engendre un champ perpendiculaire à la poutre 5. Les références 70 et 90 désignent respectivement les lignes de champ de la bobine 7 et de l'aimant permanent 9.

Le champ global entraîne l'aimantation horizontale de la poutre. L'aimantation va se maintenir lorsque le champ de la bobine 7 sera coupé, grâce au champ magnétique de l'aimant perpendiculaire. De par ses dimensions, la direction d'aimantation facile de la poutre est parallèle au substrat. Lorsque la poutre est défléchie, la projection du champ magnétique de l'aimant permanent le long de l'axe principal de la poutre est suffisante pour maintenir l'aimantation de la poutre en l'absence de courant circulant dans la bobine. La commutation inverse se fait en inversant le sens du courant dans la bobine 7, de façon à ce que le champ généré par la bobine entraîne un renversement du sens de l'aimantation de la partie mobile 5 et donc la commutation mécanique inverse. Un moment va apparaître, qui va tendre à renverser la structure pour l'aligner à nouveau dans le même sens que le champ de l'aimant permanent

### (figure 4).

Par conséquent, dans ce type de système, un moment M tend à défléchir l'élément mobile (dont l'aimantation Bₚₒᵤₜᵣₑ provient du champ créé par la bobine) afin de l'aligner dans le champ de l'aimant permanent Bₐᵢₘₐₙₜ intégré au substrat.

Un tel système nécessite un apport d'énergie uniquement pour la commutation (ON → OFF et OFF → ON), tandis que l'état fermé, comme l'état ouvert, sont énergétiquement stables, ce qui confère le caractère de bistabilité non volatile au système. De plus, une fois que la structure a été mise en contact avec le substrat (figure 4), son décollement est facilité car, non seulement la force de rappel mécanique agit, mais il y a également création d'un moment inverse. Il n'y a donc pas besoin d'un système d'actionnement inverse, puisque les mêmes structures servent à la commutation dans les deux sens.

Lors du renversement de l'aimantation, un moment M apparaît, qui va tendre à aligner le moment magnétique de la poutre 5 dans le même sens que les lignes de champ de l'aimant permanent 9, faisant basculer le système en position ouverte.

Ce principe de renversement supporte mal la réduction d'échelle, puisque le champ qui serait généré par une nano-bobine avec une densité de courant acceptable serait trop faible pour réaliser le basculement. Par exemple, le champ magnétique, généré par un fil de métal d'une section carrée de 20 nm par 20 nm, avec un écartement, compatible avec un nano-commutateur, de 50 nm, est de l'ordre de 13 µT, pour une densité de courant typique de 10⁶ A/cm², alors que le champ utile doit être de l'ordre de, ou supérieur à, plusieurs milliteslas.

De plus, l'utilisation d'aimants macroscopiques pour créer le champ magnétique permanent ne permet pas l'intégration de ce système.

Pour ces deux raisons, les structures connues ne permettent pas la co-intégration du commutateur avec l'électronique environnante, de type CMOS. Or la co-intégration est l'un des avantages principaux des NEMS par rapport à une technologie microsystème.

En d'autres termes, la réduction homothétique des dimensions d'un micro commutateur détruit totalement les propriétés magnétiques recherchées et ne permet plus la commutation ni la bistabilité.

Le document US 2007/057278 décrit une structure qui utilise toujours un matériau doux sensible au torque magnétique. Lorsque le champ n'est pas confiné, le tube est actionné vers le contact. Le second état stable est donné uniquement par la raideur mécanique qui doit contrebalancer la force d'adhésion pour se décoller du contact. En outre, l'inversion de la direction de l'aimantation résulte de l'utilisation d'un courant de spin traversant la partie magnétique fixe mécaniquement; ce courant de spin permet de changer le sens de l'aimantation d'un des 2 moyens magnétiques, ce qui induit soit un champ magnétique résultant rayonnant (voir la figure 28 de ce document) ou confiné (voir la figure 27 de ce document).

Il se pose donc le problème de trouver une nouvelle structure de commutateurs à actionnement magnétique bistable, de dimensions réduites, c'est-à-dire compatible avec une structure de type nano-commutateur.

### EXPOSÉ DE L'INVENTION

Afin de résoudre ce problème, l'invention propose un dispositif commutateur ou nano-commutateur ou un commutateur submicronique comportant :
- au moins un élément fixe et au moins un élément au moins partiellement en un matériau magnétique et mobile, souple ou flexible, par rapport à l'élément fixe,
- des moyens d'activation de l'élément mobile.
- De tels moyens peuvent comporter :
   - au moins un premier moyen magnétique, par exemple de forme plane, définissant un premier plan, pour engendrer une aimantation rémanente selon une direction contenue dans ledit premier plan ou perpendiculaire à ce premier plan,
   - et au moins un deuxième moyen magnétique, par exemple de forme plane, définissant un deuxième plan, pour engendrer une aimantation rémanente selon une direction contenue dans ledit deuxième plan ou perpendiculaire à ce deuxième plan.
   - Un dispositif selon l'invention peut en outre comporter :- des moyens pour inverser la direction de l'aimantation rémanente d'au moins un desdits premier et deuxième moyens magnétiques.

L'invention permet de réaliser un dispositif intrinsèquement bistable et autorise diverses configurations. En particulier, selon une de ces configurations, l'élément mobile peut venir en contact avec l'élément fixe : par exemple, sa souplesse lui permet d'être plaqué en partie contre cet élément fixe.

L'invention permet de réaliser une structure dont les champs magnétiques sont suffisamment intenses, à l'échelle sub-micrométrique, pour un actionnement mécanique bistable.

Selon l'invention, l'inversion de la direction de l'aimantation rémanente d'au moins un des premier et deuxième moyens magnétique peut être obtenue par effet thermique. Elle n'est pas obtenue par un courant, en particulier un courant de spin traversant la partie magnétique, cette dernière technique étant celle du document US 2007/057278. Dans ce document la bistabilité de l'actionnement n'est pas obtenue par inversion de l'aimantation. Au contraire, selon la présente invention, le champ magnétique résultant est rayonnant, mais dans 2 directions opposées, la deuxième direction étant obtenue à partir de la première par inversion de l'aimnatation.

Dans la présente invention, lorsque le champ résultant est inversé, le sens du torque s'inverse et contrebalance la force d'adhésion. Il n'y a donc pas besoin de la raideur mécanique pour modifier la position de l'élément mobile.

L'élément mobile peut être en matériau magnétique doux.

Les premiers et deuxièmes plans des premier et deuxième moyens magnétiques peuvent être confondus: c'est la cas en particulier si les premiers et deuxièmes moyens magnétiques sont situés dans un même plan géométrique, par exemple au même niveau sur ou dans un substrat.

Un moyen magnétique de forme plane a de préférence une épaisseur totale e petite devant au moins une des deux autres dimensions ou devant chacune des deux autres dimensions, par exemple e est inférieure ou égale 10% de l'une au moins des deux autres dimensions (longueur ou profondeur), les 3 dimensions étant mesurées suivant des directions perpendiculaires de l'espace.

Selon un mode de réalisation, les premiers et deuxièmes moyens magnétiques peuvent faire partie de l'élément fixe.

Le ou les premiers moyens magnétiques peuvent être à aimantation rémanente fixe selon une direction contenue dans ledit premier plan.

Le ou les deuxièmes moyens magnétiques peuvent alors être à aimantation rémanente pouvant être inversée, selon une direction contenue dans ledit deuxième plan.

Selon une variante, le ou les deuxièmes moyens magnétiques sont à aimantation rémanente pouvant être inversée, selon une direction perpendiculaire audit deuxième plan.

Le ou les deuxièmes moyens magnétiques peuvent être à aimantation rémanente fixe selon une direction perpendiculaire audit deuxième plan.

Dans ce cas, le ou les premiers moyens magnétiques peuvent être à aimantation rémanente variable selon une direction contenue dans ledit premier plan.

Un tel dispositif peut comporter une pluralité de deuxièmes moyens magnétiques à aimantation rémanente fixe selon une direction perpendiculaire audit premier plan.

Selon un autre mode de réalisation, l'élément mobile comporte le ou les premiers moyens magnétiques, et le ou les deuxièmes moyens magnétiques font partie de l'élément fixe.

Le ou les premiers moyens magnétiques peuvent être à aimantation rémanente fixe selon une direction contenue dans ledit premier plan.

Le ou les deuxièmes moyens magnétiques peuvent être à aimantation rémanente variable, selon une direction perpendiculaire audit deuxième plan.

En variante le ou les deuxièmes moyens magnétiques peuvent être à aimantation rémanente variable, selon une direction contenue dans ledit deuxième plan.

Les premier et deuxième moyens magnétiques peuvent alors être disposés dans le prolongement l'un de l'autre lorsque la partie mobile est en position de repos.

Un tel dispositif peut comporter un axe de rotation autour duquel une première partie et une deuxième partie de l'élément mobile peuvent pivoter, chaque partie de cet élément mobile comportant au moins un premier moyen magnétique, l'élément fixe comportant au moins un deuxième moyen magnétique, chacun étant disposé pour coopérer avec un premier moyen magnétique de l'élément mobile.

Selon encore un autre mode de réalisation, un dispositif selon l'invention comporte des premier et deuxième moyens magnétiques disposés de part et d'autre de la partie mobile du dispositif nano-commutateur.

Dans un tel dispositif, les premier et deuxième moyens magnétiques peuvent être à aimantation rémanente selon une direction contenue dans ledit deuxième plan, au moins une de ces aimantations étant variable.

La partie mobile peut être disposée dans le même plan que les premier et deuxième moyens magnétiques et être mobile dans ce plan. En variante, la partie mobile est disposée, et mobile, dans un plan parallèle à un plan défini par les premier et deuxième moyens magnétiques. Dans l'un ou l'autre cas, les premier et deuxième moyens magnétiques peuvent être à aimantation rémanente selon une direction contenue dans leur plan, au moins une de ces aimantations étant variable.

Quel que soit le mode de réalisation au moins un moyen magnétique à aimantation rémanente perpendiculaire à son plan peut comporter un empilement de multicouches CoPt.

Une telle structure est compatible avec une réalisation nanométrique, puisqu'un tel empilement peut avoir une épaisseur maximum comprise entre 10 nm et 20 nm.

Quel que soit le mode de réalisation, au moins un moyen magnétique à aimantation rémanente selon une direction contenue dans son plan peut comporter au moins une couche de matériau ferromagnétique et au moins une couche d'un matériau antiferromagnétique. Là encore, un tel élément est compatible avec une réalisation nanométrique.

Le matériau antiferromagnétique peut alors être par exemple de composition PtMn ou NiMn, et le matériau ferromagnétique de composition CoFe ou NiFe. Ou bien, le matériau antiferromagnétique peut être de composition IrMn ou FeMn, et le matériau ferromagnétique de composition NiFe ou CoFe.

La couche AF bloque l'aimantation de la couche F dans un sens donné. Il est cependant possible d'inverser le sens de cette aimantation. En effet, si la température de la couche AF dépasse une valeur limite (la température de blocage) elle « libère » l'aimantation de la couche F, qui peut alors s'inverser sous l'application d'un champ magnétique. Des moyens peuvent donc être prévus pour chauffer la couche de matériau antiferromagnétique (AF) au-dessus de la température de blocage de cette couche. Ces moyens peuvent comporter un conducteur de courant qui circule sous ou près de l'empilement, et qui peut le cas échéant servir à générer le champ magnétique appliqué à la couche ferromagnétique.

D'autres configurations de ces moyens magnétiques sont possibles.

Par exemple au moins l'un desdits premiers ou deuxièmes moyens magnétiques comprend un empilement de couches, tel qu'une alternance d'au moins une couche magnétique (F) et d'au moins une couche antiferromagnétique (AF). L'empilement est de préférence limité par deux couches externes dont chacune est une couche antiferromagnétique.

Au moins l'un desdits premiers ou deuxièmes moyens magnétiques peut être à aimantation réversible et être associé à des moyens de retournement de l'aimantation.

Chaque configuration d'un dispositif selon l'invention fonctionne par création d'un torseur entre la structure ou l'élément mobile et un ou plusieurs éléments magnétiques intégrés à l'élément fixe (substrat).

La partie mobile et la partie fixe peuvent être disposées sensiblement parallèlement l'une par rapport à l'autre lorsque la partie mobile est dans l'une de ses positions stables. Dans cette position, la distance entre ces deux éléments est d'environ quelques dizaines de nanomètres ou quelques centaines de nanomètres, par exemple comprise entre 10 nm et 500 nm. L'élément mobile vient en contact avec l'élément fixe du fait de sa souplesse qui lui permet, sous l'action du torseur magnétique, d'être plaqué en partie contre cet élément fixe, tandis qu'une extrémité de l'élément mobile reste, elle, fixe par rapport à l'élément fixe.

Des moyens pour inverser le sens de l'aimantation rémanente d'un élément magnétique planaire, que cette aimantation soit orientée dans le plan ou perpendiculairement au plan de cet élément magnétique, peuvent comporter :
- des moyens, par exemple des moyens conducteurs du courant, pour chauffer, par exemple la couche de matériau antiferromagnétique au dessus de sa température de blocage ,
- des moyens, par exemple des moyens conducteurs du courant, de génération d'un champ magnétique d'orientation, par exemple de l'aimantation de la couche de matériau ferromagnétique ou de l'empilement de multicouches CoPt.

Un conducteur de courant unique peut éventuellement assurer les deux fonctions, de chauffage et d'orientation magnétique. Ou bien deux éléments conducteurs séparés ou différents peuvent être prévus, l'un pour chauffer la couche antiferromagétique, l'autre pour induire un champ magnétique d'orientation de l'aimantation.

Un dispositif selon l'invention peut comporter en outre une couche en un matériau apte à dégager de la chaleur sous l'action d'un courant électrique, disposée entre le ou les éléments conducteurs et la couche antiferromagnétique.

L'élément conducteur pour chauffer la couche antiferromagétique peut comporter une thermistance.

Des moyens peuvent être prévus, pour former une barrière thermique servant à confiner la chaleur dans le moyen magnétique à aimantation planaire et/ou du moyen magnétique à aimantation perpendiculaire.

L'invention autorise en outre l'intégration du système de nano-commutateur avec des moyens électroniques.

Dans un dispositif ou un procédé selon l'invention :
- des moyens magnétiques à aimantation plane permettent d'obtenir un champ qui peut-être par exemple de l'ordre de 1T ou 2T, ou supérieur à ces valeurs, par exemple 2.4 T, le champ rayonné pouvant être de quelques mT ; par exemple il est compris entre 1 mT et 5 mT ou 10 mT à une distance de 200nm ;
- et/ou des moyens magnétiques à aimantation perpendiculaire permettent d'obtenir un champ qui peut-être par exemple de l'ordre de 1T, ou supérieur à 0,5 T ou à 1T.

### BRÈVE DESCRIPTION DES FIGURES

- Les figures 1A-1D illustrent la programmation d'un point nano-commutateur à actionnement électrostatique.
- Les figures 2A et 2B illustrent le fonctionnement d'un nano-commutateur à base de nanotubes.
- Les figures 3 et 4 illustrent un principe d'actionnement bistable par alignement du moment magnétique.
- Les figures 5A à 5F représentent des empilements de type couche ferromagnétique/couche antiferromagnétique, mis en oeuvre dans le cadre de la présente invention.
- Les figures 6A à 6C représentent un empilement à aimantation perpendiculaire, mis en oeuvre dans le cadre d'un dispositif selon l'invention.
- Les figures 7A à 9 représentent divers dispositifs nano-commutateurs selon l'invention, à actionnement magnétique intrinsèquement bistable, à mouvement hors plan.
- Les figures 10A à 10D représentent chacune un dispositif nano-commutateur selon l'invention, à actionnement magnétique intrinsèquement bistable, à mouvement dans le plan.
- La figure 11 représente encore un autre type de dispositif nano-commutateur selon l'invention.
- Les figures 12A-12C représentent le mécanisme de renversement d'aimantation d'une couche AF/F.
- Les figures 13A à 18 représentent diverses variantes d'un dispositif selon l'invention et diverses applications d'un tel dispositif.
- Les figures 19A à 20C représentent des étapes de procédés de réalisation d'un dispositif selon l'invention, ainsi que d'un autre type de dispositif nano-commutateur selon l'invention.
- Les figures 21A à 21I représentent des étapes d'un autre procédé de réalisation d'un dispositif selon l'invention.
- Les figures 22A et 22B montrent un exemple d'application d'un dispositif selon l'invention à un interrupteur de type nano-commutateur.
- Les figures 23A à 24C représentent des étapes de réalisation d'aimants, sans ou avec éléments conducteurs associés.

### EXPOSÉ DÉTAILLÉ DE MODES DE RÉALISATION PARTICULIERS

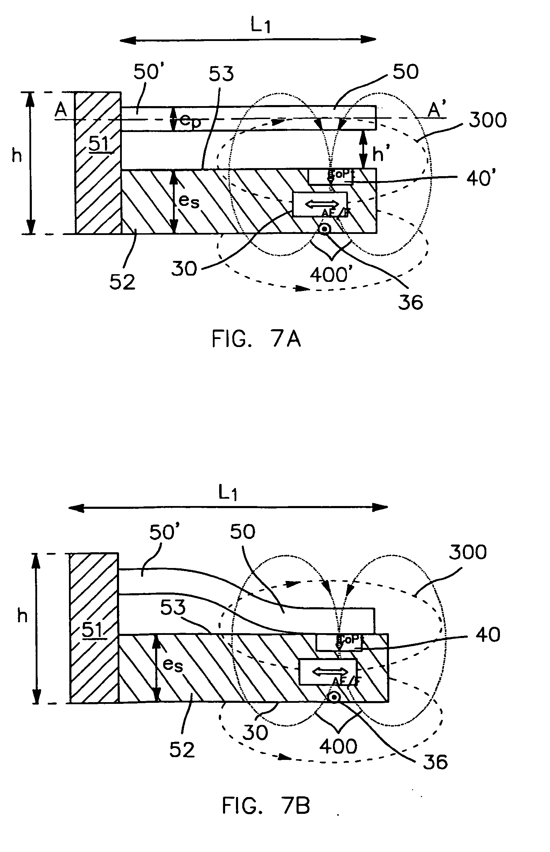

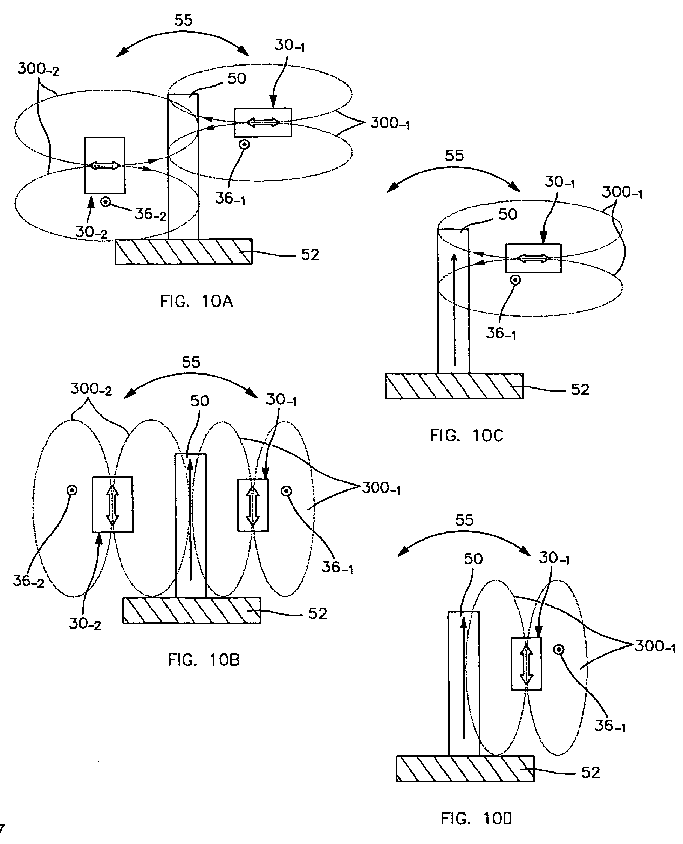

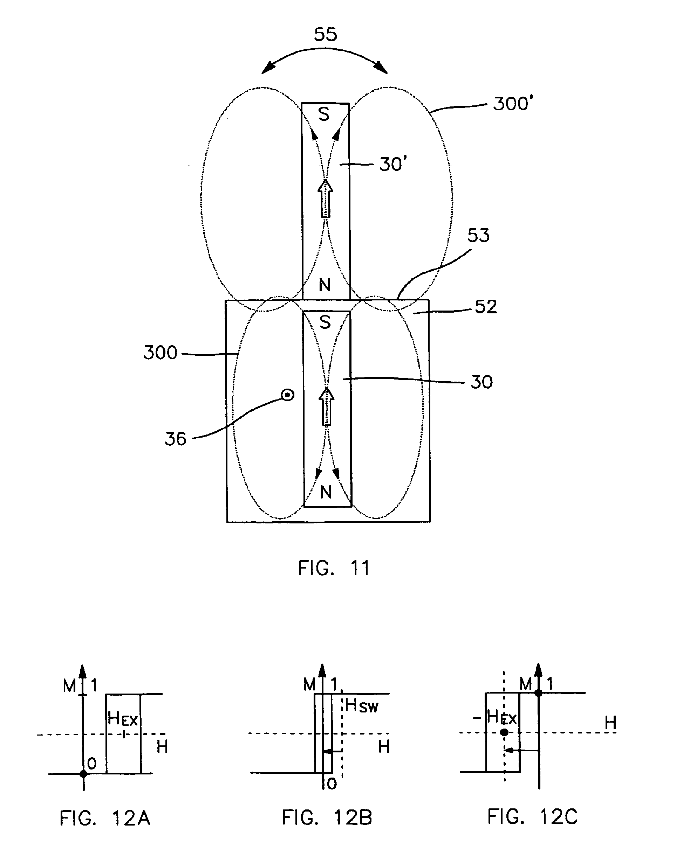

Un dispositif selon l'invention comporte une partie fixe et une partie mobile par rapport à la partie fixe. La partie mobile est par exemple une plaque ou une poutre, et sera dans la suite désignée par l'un ou l'autre de ces termes. Cette partie mobile a en général une souplesse qui lui permet, sous l'action du torseur des forces magnétiques, de venir en partie au contact de la partie fixe, comme on le voit sur la figure 7B, ou qui lui permet d'être fléchie d'une certaine amplitude comme l'indique la flèche 55 des figures 10A, 10B et 11.

Un dispositif selon l'invention met en oeuvre des moyens magnétiques, ou aimants, de forme plane, à aimantation rémanente, de sens soit irréversible soit réversible, dans le plan des moyens magnétiques ou perpendiculairement à ce plan. Dans le cas d'une aimantation rémanente, la réversibilité peut être obtenue par chauffage et application d'un champ magnétique externe suivant la direction désirée et le sens désiré.

Ces moyens magnétiques permettent de générer un torseur grâce auquel la partie mobile du dispositif pourra passer d'une première position, stable, à une deuxième position, elle aussi stable ; ce sont, par exemple, d'une part la position ouverte et d'autre part la position fermée d'un commutateur.

Un exemple d'un système de nano-commutateur selon l'invention, à actionnement par torseur magnétique, est illustré sur les figures 7A et 7B. D'autres exemples seront décrits plus loin.

Dans cet exemple, un nano-commutateur comporte une partie mobile, par exemple une poutre, référencée 50 sur la figure 7A. Cette partie mobile est dans sa deuxième position stable (position de repos) sur la figure. Elle est fixée, par une de ses extrémités 50', à un socle 51 fixe. Cette partie mobile, dans cet exemple, est en matériau magnétique doux, de préférence déposé en couches minces. Ce matériau est par exemple à base de Ni et/ou Fe et/ou Co (tels que NiFe, ou CoZrNb, ou CoFeB).

Un substrat 52 forme une partie dite fixe, qui peut être solidaire du socle 51. Lorsque la partie mobile est dans sa deuxième position stable (cas de la figure 7A), elle n'est pas en contact avec la surface 53 du substrat 52 (elle peut être parallèle à cette surface, mais pas nécessairement car elle peut être toujours attirée par les moyens magnétiques 30, 40'). Lorsque la partie mobile 50 est activée, par des moyens magnétiques comme expliqué ci-dessous, elle est défléchie, se rapproche de la surface 53 du substrat 52 et finalement vient dans sa première position stable, au contact de cette surface 53 (comme illustré en figure 7B).

Selon un exemple, le matériau du substrat 52 est choisi pour ses propriétés d'isolation thermique et électrique : on peut par exemple choisir un substrat en silicium, ou en dioxyde de silicium, ou en nitrure de silicium.

Des moyens magnétiques 30, dans le substrat 52, permettent de générer un champ magnétique (dont les lignes de champ 300 sont identifiées sur la figure 7A), qui, à son tour, génère une aimantation dans la poutre 50. Cette aimantation de la poutre se situe sensiblement, ou principalement, dans le plan de la partie mobile ou de la poutre. La trace de ce plan est identifiée, sur la figure 7A, par l'axe AA' ; on désignera donc, par la suite, ce plan par l'expression « plan AA' », et l'aimantation ainsi engendrée dans la poutre sera qualifiée de planaire. Comme on va le voir, cette aimantation peut-être retournée dans ce même plan : en d'autres termes, sa composante principale a un premier sens suivant une certaine direction dans le plan AA', mais elle peut être amenée, suivant la même direction, à avoir le sens opposé. L'aimantation rémanente produite par les moyens magnétiques 30 est parallèle à la surface 53, quelle que soit la direction de cette aimantation rémanente.

En outre, des moyens 40' permettent de générer une aimantation, sensiblement perpendiculaire au substrat 52 et à la partie mobile ou à la poutre 50. Ces moyens prennent ici la forme d'un aimant 40', de forme plane (par exemple en couche mince comme expliqué plus loin), à aimantation perpendiculaire (par exemple un multicouches Co/Ni, ou Co/Pt, ou un alliage de fer et de platine ou un alliage de fer et de palladium) intégré au substrat 52. Cet aimant engendre des lignes de champ 400', dont on voit, sur la figure 7A, qu'elles sont sensiblement perpendiculaires à la poutre 50 dans sa deuxième position stable (ou même dans sa première position stable, voir figure 7B).

La combinaison des champs générés par chacun des moyens 30 et 40', et la possibilité de basculer ou de retourner l'aimantation rémanente des moyens magnétiques 30, va permettre d'actionner la partie mobile 50 du nano-commutateur. Cette combinaison résulte en un torseur qui tend à fléchir l'élément mobile 50, et à l'amener au contact de la surface 53 du substrat 52, position illustrée sur la figure 7B. L'extrémité 50' fixée au socle 51 reste immobile.

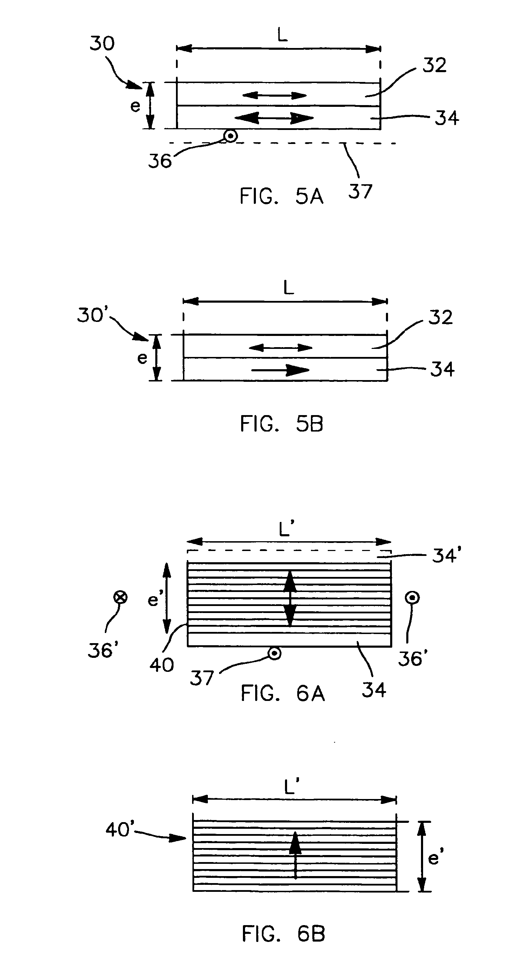

Un exemple des moyens 30 est représenté en figure 5A et comporte une couche 32 de matériau ferromagnétique (F) et une couche 34 d'un matériau antiferromagnétique (AF). Ces deux couches forment un élément planaire, puisque l'épaisseur totale e de ce dernier est petite devant au moins une des deux autres dimensions ou devant chacune des deux autres dimensions, par exemple e est inférieure ou égale 10% de l'une au moins des deux autres dimensions. À titre d'exemple, cette épaisseur e est comprise entre environ 50 nm et 150 nm, par exemple égale à environ 110 nm, pour une largeur L (mesurée dans le plan de la figure 5A) de l'ordre de grandeur de quelques µm à quelques dizaines de micromètres, par exemple entre 5 µm et 50 µm, par exemple encore de l'ordre de 10 µm. Sa profondeur (dimension perpendiculaire au plan de la figure) est de l'ordre de grandeur de quelques centaines de nm à quelques dizaines de micromètres, par exemple entre 200 nm et 50 µm ; elle est de préférence supérieure à la profondeur de la poutre 50. Le rapport L/e peut donc être d'au moins 30 ou 100.

Les dimensions latérales peuvent être plus petites que celles indiquées ci-dessus. Par exemple la profondeur peut être de l'ordre de quelques centaines de nm, par exemple égale à environ 200 nm. Avantageusement, avec un aimant situé en dessous de l'élément mécanique, les dimensions de cet aimant seront de l'ordre de quelques micromètres, ce qui permet d'assurer une bonne uniformité du champ magnétique.

À cet ensemble est associé un moyen de chauffage, par exemple une ou plusieurs lignes de courants 36 disposées contre la couche 34 antiferromagnétique, ou de manière proche de cette couche. Avantageusement, une couche intermédiaire de matériau, par exemple TiN ou GeSbTe, apte à dégager de la chaleur sous l'action d'un courant électrique (thermistance) peut être disposée entre la ligne 36 et la couche 34. Mais, de manière avantageuse, cette dernière est au plus près de la ligne de courant 36, afin qu'un chauffage le plus efficace possible puisse être assuré. La ou les lignes 36 sont de préférence rectilignes afin de générer un champ magnétique transverse (dans le plan de la couche 34) le plus homogène possible. Dans la suite on limite la description au cas d'une seule ligne de courant, mais le cas de deux lignes s'en déduit aisément.

La couche 34 AF bloque l'aimantation de la couche 32 dans un sens ou dans l'autre, dans le plan de l'élément 30. le champ généré par l'ensemble est également localement dans le plan de l'élément 30.

Cependant, si la température dépasse une valeur limite (la température de blocage, déterminée par la couche 34 antiferromagnétique, par exemple 150°C) l'aimantation de la couche 32 peut s'inverser, tout en restant dans le plan de l'élément 30, sous l'application d'un champ magnétique. En d'autres termes, le dépassement de la température de blocage de la couche 34 permet de libérer l'aimantation de la couche ferromagnétique.

Cette température de blocage peut être atteinte et dépassée, par application d'un courant I dans la ligne de courant 36. Le chauffage ainsi produit va être transmis à la couche 34.

Cette ligne de courant 36 va également permettre d'induire un champ magnétique, qui va orienter l'aimantation de la couche ferromagnétique 32 et permettra de faire basculer cette aimantation.

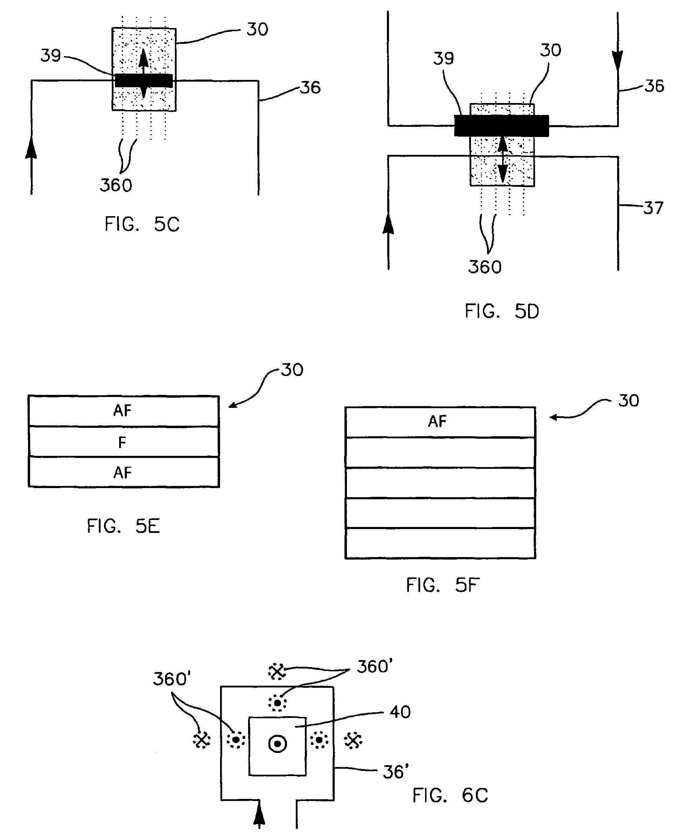

L'empilement de couches magnétiques dans les moyens magnétiques, à aimantation plane et retournable, peut comporter des variantes plus complexes, qui permettent de mieux contrôler l'alimentation de la couche F. Par exemple, un empilement comporte, comme illustré sur la figure 5E, une couche F prise en sandwich entre deux couches AF. Par exemple encore, la structure de la figure 5F peut être réalisée: elle comporte l'empilement suivant couche AF/couche F/couche AF/couche F/couche AF. Un nombre quelconque de couches, alternativement F et AF, peut être prévu. De préférence, c'est un nombre impair de couches, avec une couche AF qui limite l'empilement à chacune de ses extrémités, en d'autres termes, l'ensemble des couches est compris entre deux couches AF, comme sur les figures 1E et 1F.

La figure 5C est une vue de dessus du dispositif de la figure 5A, où l'on reconnaît l'élément 30. Une thermistance 39, par exemple en TiN ou en TaN ou en GeSbTe, est avantageusement disposée sous l'élément 30 et sur le chemin du courant amené par la ligne 36 afin d'augmenter le transfert de chaleur vers celui-ci.

Au lieu d'une seule ligne de courant, on peut avoir 2 (ou plusieurs) lignes, l'une permettant d'augmenter la température au-dessus de la température de basculement, et l'autre pour engendrer le champ magnétique qui va permettre d'orienter et de bloquer l'aimantation dans la couche 32. C'est ce que représente la figure 5D, qui est également une vue de dessus d'un tel dispositif, où l'on reconnaît encore l'élément 30 et la thermistance 39 mentionnée ci-dessus et disposée comme expliqué ci-dessus. Mais une deuxième ligne 37 de courant passe également sous l'élément 30 et permet de générer un champ magnétique dans ce dernier.

Sur les deux figures 5C et 5D sont également représentées les lignes de champ 360 générés par le courant circulant dans la ligne 36 (figure 5C) ou dans la ligne 37 (figure 5D).

Quelle que soit la forme de la ligne, ou des lignes, de courant, il n'y a pas de circulation de courant à travers l'empilement F/AF pour réaliser l'actionnement du commutateur.

On peut donc retourner l'aimantation de la couche 32, et donc le champ généré par l'élément 30 dans son propre plan, grâce aux conducteurs 36 et 37, appliqué contre ou au voisinage de l'élément 30. Avantageusement on utilise un unique conducteur 36 pour assurer la fonction de chauffage et d'application de champ magnétique.

Une fois l'aimantation de la couche 32 retournée, elle génère un champ magnétique dans le plan de l'élément 30, de sens opposé à celui qu'elle générait avant.

Les figures 12A-12C représentent le mécanisme d'écriture de l'élément 30 AF/F, dans le cas où deux conducteurs 36, 37 sont présents, l'un pour assurer la fonction de chauffage, l'autre pour générer un champ magnétique. Soit I_{H} représente le courant circulant dans le conducteur et servant à générer le champ magnétique et *I_{T}* le courant circulant dans le conducteur et servant à chauffer la couche AF. A la température ambiante, le cycle d'hystérésis de l'aimantation M de l'empilement, en fonction du champ magnétique extérieur H, est décalé de Hₑₓ (également appelé champ de rigidification), si bien que, pour un champ magnétique extérieur *Hₛₖ* nul, on a une aimantation rémanente (ici négative, voir figure 12A), et *I_{H}* = 0, *I_{T}* = 0.

Puis (figure 12B), on chauffe la couche au-delà de la température de blocage (*I_{T}* > 0), et on décale le cycle de façon à annuler *Hₑₓ*. On soumet, dans le même temps, l'empilement à un champ magnétique extérieur *H*_{*sw*,} *(I_{H}* < 0), tel que H_{sw}, soit de signe opposé à Hₑₓ initial et que | H_{sw} | > | Hₑₓ |.

Enfin, on coupe le chauffage (la température redevient la température ambiante), le matériau se refroidit sous champ H_{sw} et acquiert un décalage de -Hₑₓ après refroidissement (figure 12C, *I_{H}* = 0, *I_{T}* = 0).

On peut placer une thermistance (par exemple une couche de TiN ou GeSbTe) entre le conducteur 36 et l'empilement 30 de façon à chauffer la couche 34 et/ou placer une barrière thermique (par exemple en TiN ou en GeSbTe) au dessus de l'empilement 30 afin d'éviter une dissipation de chaleur dans l'air.

Il est possible d'utiliser :
- en tant que matériau de couche AF antiferromagnétique le PtMn ou le NiMn (température de blocage importante), qui peut être associé au CoFe, ou au NiFe en tant que matériau de couche ferromagnétique,
- ou, en tant que matériau de couche antiferromagnétique, l'IrMn ou le FeMn, qui a une température de blocage moins élevée que PtMn, ou NiMn, et qui peut être associé au NiFe ou au CoFe en tant que matériau de couche ferromagnétique

I1 est possible de mettre en oeuvre ces couples de matériaux (AF, F) : (PtMn, CoFe), (PtMn, NiFe), (NiMn, CoFe), (NiMn, NiFe) (pour lesquels Tb est importante) et (IrMn, NiFe), (IrMn, CoFe) (pour lesquels Tb est moins importante), dans le cadre de la présente invention. On peut également mettre en oeuvre les couples (AF, F) de matériaux (FeMn, NiFe), (FeMn, CoFe).

Pour obtenir une aimantation forte, on utilise le matériau CoFe, qui a une aimantation de 2,4 T (alors que NiFe a une aimantation de 1 T). On utilise donc alors, de préférence, les couples (AF, F) suivants : (PtMn, CoFe), (NiMn, CoFe), (IrMn, CoFe), (FeMn, CoFe).

Un procédé de réalisation des couches 32, 34 est par exemple un procédé par pulvérisation cathodique, ou ionique (PVD, IBD « ion beam deposition »).

On verra, dans la suite, qu'une variante 30' de cet élément, sans conducteur 36 (figure 5B), peut aussi être mise en oeuvre dans certains modes de réalisation. L'aimantation de la couche ferromagnétique 32 reste alors fixée ou bloquée par la couche antiferromagnétique 34 AF dans le plan de cet élément 30'. Dans ce cas, les matériaux de ces couches peuvent être ceux déjà indiqués ci-dessus.

Un exemple des moyens 40 est représenté en figure 6A. Ces moyens comportent un aimant, réalisé en couches minces, de forme plane, à champ perpendiculaire à son plan et, là encore, au moins une couche 34 d'un matériau antiferromagnétique (AF), par exemple en IrMn ou en PtMn ou en NiMn. Il peut y avoir deux couches antiferromagnétiques 34, 34', disposées d'un côté et/ou de l'autre côté de l'empilement 40 de couches minces.

L'aimantation peut être retournée à l'aide des moyens 36' conducteurs. Par exemple une bobine entoure l'élément 40 et est disposée dans un plan sensiblement perpendiculaire à la direction du champ engendré. Le retournement de l'aimantation rémanente se fait par effet thermique, comme dans le cas des composants de la figure 5A.

Il y a la possibilité d'avoir deux moyens conducteurs 36', 37, comme dans le cas de la figure 5D: les moyens conducteur 37 permettent de chauffer les couches antiferromagnétiques, les moyens conducteur 36' permettent d'appliquer le champ magnétique.

Le conducteur mis en oeuvre pour le chauffage peut comporter, comme expliqué ci-dessus, une thermistance, par exemple en TiN ou en TaN ou en GeSbTe.

Un autre exemple de moyens 40' permettant d'engendrer une aimantation rémanente perpendiculaire à son plan et permanente est représenté en figure 6B. là encore, ces moyens comportent un empilement de couches minces et ils sont de forme plane.

Dans le cas des deux figures 6A et 6B, l'épaisseur e' est très inférieure aux deux autres dimensions, ou en tout cas différente par au moins un ordre de grandeur, de ces deux autres dimensions. Cet aimant est de type multicouches CoPt ou en d'autres matériaux.

La figure 6C représente une vue de dessus du dispositif de la figure 6A. Les moyens 40, avec aimantation rémanente perpendiculaire, sont entourés par une bobine 36' qui chauffe la couche et génère le champ magnétique 360' de renversement de l'aimantation. La couche antiferromagnétique n'est pas visible de manière individuelle sur cette vue de dessus.

Le choix du matériau dépendra de son aptitude à engendrer une aimantation perpendiculaire, et ceci tout en tenant compte également de l'épaisseur des couches constituant l'empilement 40. À titre d'exemple, une aimantation rémanente à la surface de l'empilement 40 ou 40', inférieure à 1 T, de l'ordre de quelques dixièmes de tesla, par exemple 0,6 T, ou encore supérieure à 0,3 ou 0,5T, convient pour une application à un nano-commutateur selon l'invention.

À titre d'exemple encore, on peut citer, pour l'empilement 40, 40' des figures 6A-6B, une épaisseur e' comprise entre 10 nm et 20 nm, par exemple 15 nm, pour une largeur L' de l'ordre de quelques centaines de nanomètres, par exemple comprise entre 100 nm et 500 nm, par exemple égale à 400 nm. L'épaisseur e' indiquée signifie que chacune des couches de l'empilement 40 peut avoir elle-même une épaisseur de l'ordre du nanomètre, par exemple comprise entre 0,5 nm et 1,5 nm. Sa profondeur peut être égale à L', ou de l'ordre de grandeur de L'. La couche antiferromagnétique a une épaisseur de l'ordre de la dizaine de nm, par exemple de 2 nm à 15 nm (Phys.Rev.B, 72, 104412, 2005).

L'empilement 40, 40' peut être réalisé par exemple par pulvérisation cathodique de couches, alternativement de cobalt et de platine ; on obtient donc un motif (Co/Pt)n, où n est le nombre de répétitions de l'empilement platine/cobalt. On peut procéder de même avec d'autres compositions.

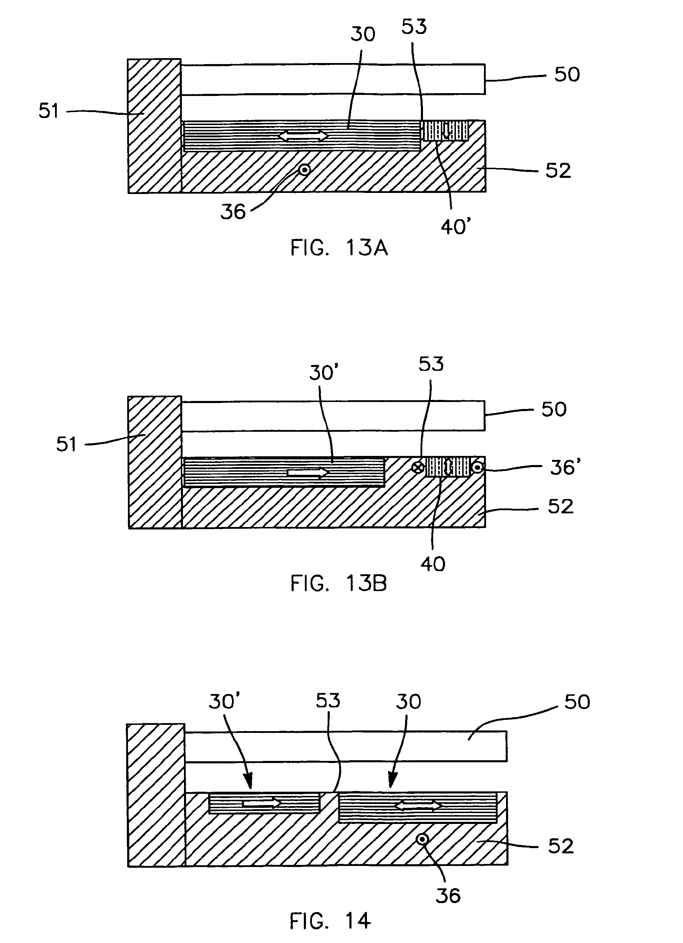

Quels que soient les modes de réalisation mis en oeuvre, les deux éléments que constituent l'aimant 40, 40' en couches minces combinés avec une couche AF, à aimantation rémanente perpendiculaire à son plan, et la couche AF/F 30, 30' à aimantation rémanente dans son plan, sont séparés, dans le substrat 52, d'une distance de l'ordre par exemple de quelques nm ou de quelques dizaines de nm, par exemple, 20 nm. Ces deux éléments 30 ou 30', 40 ou 40', peuvent être disposés sur ou dans un même plan, ou l'un au-dessus de l'autre. Avantageusement, pour maximiser la différence de position de l'élément mobile 50 entre ses deux états stables, l'élément de plus faible aimantation se situe au plus près de cet élément mobile. Différents modes de réalisation d'un dispositif selon l'invention, avec diverses positions respectives des moyens d'activation 30,30', 40, 40' sont décrits plus loin en liaison avec les figures 13A à 18.

A titre d'exemple, un système selon l'invention, tel qu'illustré sur les figures 7A et 7B, a une hauteur h (hors conducteur, voir ci-dessous) de l'ordre de quelques centaines de nanomètres, par exemple 500 nm. La poutre 50 peut avoir une épaisseur ep de quelques dizaines de nanomètres, par exemple comprise entre 10 nm et 100 nm ; elle est par exemple d'environ 50 nm.

La souplesse de la poutre 50 est caractérisée par une constante de raideur inférieure ou égale à quelques N/m, par exemple 5 N/m ou 10 N/m.

Le gap h' (distance entre les parties fixes et mobiles, dans la deuxième position stable, ou position « ouverte », celle de la figure 7A) est par exemple sensiblement compris entre 10 nm ou 50 nm et 400 nm, tandis que le substrat isolant 52 a une épaisseur d'environ 150 nm à 200 nm (hors conducteur, voir ci-dessous).

En fait, dans ces modes de réalisation des figures 7A et 7B, la hauteur h et l'épaisseur du substrat 52 sont donnés sans prendre en compte les éléments conducteurs. Ceux-ci peuvent impliquer une épaisseur de l'ordre de 2 µm.

D'une manière générale, le substrat 52 peut surmonter une plaquette en matériau semi-conducteur, par exemple d'épaisseur de quelques centaines de µm, dans lequel la/les lignes de courant de chauffage et de génération de champ magnétique de trouvent.

La largeur L1 du système peut être d'environ quelques micromètres à quelques dizaines de micromètres, par exemple entre 1 µm et 50 µm. Mais, avantageusement, cette largeur de l'élément mobile est nanométrique ou submicronique, par exemple comprise entre 50 nm et 1 µm, afin d'obtenir un nano-commutateur compact.

Plus généralement, un nano-commutateur, ou commutateur submicronique, a un gap h' submicronique, ce qui est le cas avec les valeurs indiquées ci-dessus ; en outre, de préférence, au moins une dimension de l'élément mobile est également submicronique.

On obtient donc un ensemble d'un volume compris par exemple entre 30000 nm3 et 10 µm3 (hors éléments conducteurs, voir ci-dessus)..

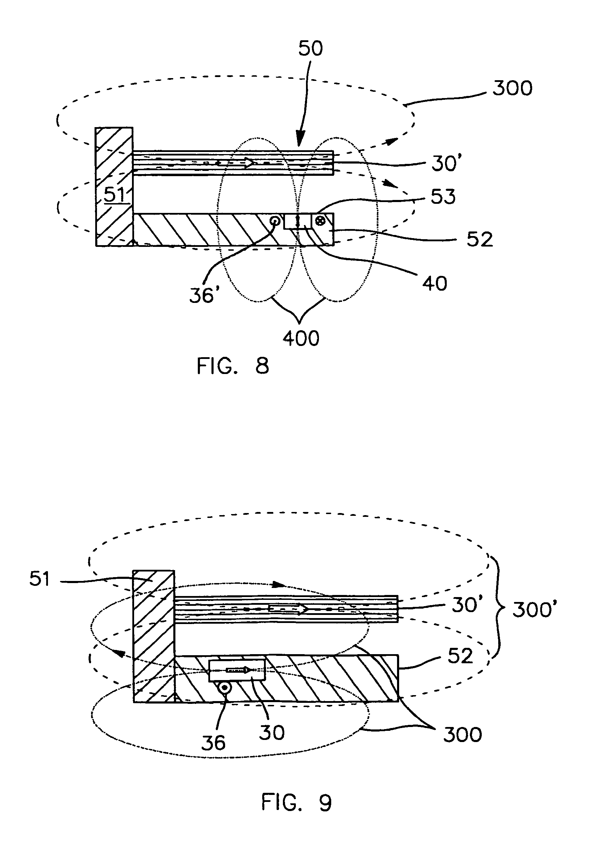

Un autre mode de réalisation d'un dispositif selon l'invention est illustré en figure 8, dans laquelle l'élément mobile 50 est en fait lui-même, au moins partiellement, une couche ou un élément 30', du type décrit ci-dessus en liaison avec la figure 5B, qui permet d'engendrer une aimantation rémanente, non réversible, dans son propre plan. Les dimensions de ces moyens 30' sont différentes de celles indiquées ci-dessus, elles sont plutôt de l'ordre de celles indiquées pour la poutre 50 en liaison avec la figure 7A. Cet élément 30' interagit avec des moyens magnétiques 40, à aimantation rémanente perpendiculaire, du type de celui décrit ci-dessus en liaison avec la figure 6A et qui est intégré au substrat 52 et dont on peut retourner l'aimantation.

En fonction du sens de l'aimantation des moyens 40, l'élément mobile 50 est attiré vers le substrat 52 ou repoussé du substrat 52. De l'interaction entre les moyens 30' et 40 résulte un torseur qui tend, selon le sens de l'aimantation, à fléchir l'élément mobile 50 afin de l'aligner sur le champ de l'élément 40 intégré au substrat 52, ou au contraire à éloigner l'élément mobile 50 du substrat 52. En position commutée (première position stable), l'élément mobile peut être en contact avec la surface 53 du substrat 52, comme dans le cas de la figure 7B.

En variante de ce qui est représenté en figure 8, la partie mobile comporte un support mécanique, par exemple une couche de 50 nm en Ru, sur lesquels sont disposés les moyens magnétiques qui se déforment avec le support mécanique.

Les figures 7A, 7B et 8 sont indicatives seulement et l'invention peut être utilisée avec d'autres géométries et formes d'éléments mobiles, comme des bras de torsions ou des poutres encastrées ou encastrées des deux côtés. Des exemples en sont donnés plus loin, en liaison avec les figures 13A à 19.

Pour concevoir un système selon l'invention, tel que décrit ci-dessus ou selon l'un des modes de réalisation ci-dessous, on prend en compte les dimensions des structures utilisées (structure mobile 50, moyens magnétiques 30, 30', 40, 40') et leurs positions relatives. La commutation de l'élément mobile d'un état à l'autre est obtenue par renversement du champ d'un des moyens magnétiques, qui modifie le torseur s'exerçant sur l'élément mobile, ce qui permet d'obtenir deux états ou positions stables : dans l'une de ces positions stables, l'élément mobile est en contact avec le substrat (il s'agit de la position fermée, illustrée par exemple en figure 7B), tandis que, dans l'autre position, le dispositif est ouvert.

Le calcul du dimensionnement d'un dispositif selon l'invention peut être résumé de la manière suivante.

Partant des caractéristiques souhaitées en ce qui concerne, notamment, les dimensions du nano-commutateur magnétique (en particulier le gap h'), les valeurs d'aimantation, ainsi que des données sur les matériaux utilisés, par exemple le module d'Young de la partie mobile (cette donnée peut être trouvée dans la littérature ou mesurée), on peut calculer les champs exaltés autour de la valeur nominale de l'écart h', puis on réalise un calcul mécanique du torseur induit par ces champs. En d'autres termes, on réalise un calcul des champs dans la portion de l'espace où va se trouver la poutre, ainsi qu'un calcul des paramètres mécaniques (forces et couples notamment) auxquels elle va être soumise. Ce calcul est itéré jusqu'à trouver le point d'équilibre de déflexion, c'est-à-dire le point d'équilibre entre les forces magnétiques et les forces de rappel élastique. On compare alors cette déflexion à l'écart h' entre la poutre 50 et le substrat 52, la déflexion devant être supérieure à h' (pour la première position stable, fermée). A partir du calcul de déflexion, on peut modifier les positionnements relatifs aimants/élément(s) mécanique(s) pour chercher à optimiser la structure et on réitère les calculs. Pour l'optimisation on peut également prendre en compte l'influence des procédés dans la fabrication des différentes couches en mesurant les caractéristiques de chaque couches, comme les contraintes mécaniques résiduelles. On peut prendre en compte d'autres paramètres, par exemple les forces de surface.

Selon un mode de réalisation de l'invention, on utilise :
- des moyens 30, dont on peut retourner l'aimantation grâce à un conducteur 36 de courant (qui génère un champ magnétique et chauffe localement, comme déjà expliqué ci-dessus). Si on utilisait une nano-bobine, sa section limiterait la densité de courant que l'on peut faire circuler au travers, limitant la valeur du champ magnétique généré. L'utilisation des couches F/AF 32, 34 permet de s'affranchir de ce problème. Le champ magnétique, localement planaire, généré par ces couches est bien supérieur au champ magnétique qui serait généré par une bobine dont la taille serait adaptée au NEMS,
- un multicouche 40, qui peut être intégré directement dans le système, ce qui autorise l'intégration totale du dispositif.

En utilisant ces deux moyens combinés on peut actionner une nanostructure par modification du torseur exercé sur l'élément mobile d'une structure mobile.

Les modes de réalisation illustrés en figures 9 à 11 sont également des nano-commutateurs bistables selon l'invention. Ils mettent en oeuvre des couches 30, 30', F/AF. Celles-ci ont la structure déjà expliquée ci-dessus en liaison avec les figures 5A et 5B. Les compositions et les dimensions des couches sont également celles déjà indiquées.

Dans le mode de réalisation de la figure 9, l'élément mobile 50 est en fait - comme dans le cas de la figure 8 - au moins en partie lui-même une couche ou des moyens 30' - du type décrit ci-dessus en liaison avec la figure 5B. Les dimensions de ces moyens 30' sont de l'ordre de celles indiquées pour la poutre 50 en liaison avec la figure 8.

Le substrat 52 comporte, comme dans le mode de réalisation de la figure 7A, un empilement F/AF 30, de préférence du type illustré ci-dessus en liaison avec la figure 5A, c'est-à-dire du type comportant un conducteur 36. C'est donc l'aimantation de ces moyens 30 que l'on inversera, l'aimantation des moyens 30' restant fixe.

En fonction de la position relative des deux aimantations des moyens 30, 30', il se produira une attraction ou une répulsion des moyens 50 vers le substrat 52.

En ce qui concerne les compositions du substrat 52, et des couches F/AF des moyens 30, 30', on se reportera à ce qui a déjà été indiqué ci-dessus en liaison avec les modes de réalisation précédents. Le substrat 52 peut avoir les mêmes propriétés isolantes que le substrat 52 de la figure 7A.

Sur la figure 9 les références 300, 300' désignent les lignes de champ associées à chacun des moyens 30, 30'. Les dimensions du système de la figure 9 peuvent être identiques à, ou proches de, celles indiquées ci-dessus pour les dispositifs des figures 7A - 7B ou 8.

Dans ce nano-commutateur de la figure 9, on retourne l'aimantation du système 30, pour que le principe d'actionnement suivant soit mis en oeuvre : des forces d'attraction ou de répulsion s'exercent entre les deux aimants constitués par les deux systèmes 30, 30', en fonction de leurs polarisations magnétiques relatives, ce qui permet de réaliser des mouvements de l'élément mobile 50 dans le plan de la figure 9. La structure mobile 50 peut donc commuter entre deux positions stables.

Selon un autre mode de réalisation, illustré en figure 10A, un nano-commutateur bistable selon l'invention met en oeuvre des moyens magnétiques 30-1, 30-2, dont l'un au moins est à aimantation réversible, et dans le plan de chacun de ces moyens. Ceux-ci sont disposés de part et d'autre de l'élément mobile 50, qui prend ici la forme d'une poutre, en matériau ferromagnétique, par exemple en FeNi, disposée perpendiculairement au substrat 52. Ces couches 30 sont du type de celle illustrée sur la figure 5A, et dont on peut retourner l'aimantation à l'aide des moyens conducteurs 36-1 et 36-2. Cette aimantation est dirigée, dans les moyens 30-1, 30-2 eux-mêmes, sensiblement perpendiculairement à la direction de la poutre 50.

Dans ce nano-commutateur de la figure 10A, on libère, par action du courant dans un des deux éléments 30-1, 30-2, l'aimantation planaire d'un de ces éléments, pour que le principe d'actionnement selon l'invention fonctionne : des forces d'attraction des deux aimants 30-1, 30-2, s'exercent sur l'élément mobile 50, ce qui permet de réaliser des mouvements de l'élément mobile 50 dans le plan de la figure 10A, suivant la flèche 55. La structure mobile 50 peut donc commuter entre deux positions stables. La distance séparant l'élément mobile de chacun des systèmes 30-1, 30-2, de l'épaisseur de l'élément 50 est du même ordre de grandeur que h', dans la structure de la figure 7A.

Fonctionnant sur le même principe que celle de la figure 10A, la structure de nano-commutateur bistable de la figure 10B comporte des moyens magnétiques 30-1, 30-2, dont l'un au moins est à aimantation réversible, et dans le plan de chacun de ces moyens. Mais l'aimantation, que l'on peut retourner à l'aide des moyens conducteurs 36-1 et 36-2, est dirigée, dans les moyens 30-1, 30-2 eux-mêmes, sensiblement parallèlement à la direction de la poutre 50. Celle-ci est un matériau ferromagnétique par exemple en FeNi.

D'autres variantes sont réalisables illustrées sur les figures 10C et 10D.

Dans ces deux variantes, la poutre est en partie au moins un aimant permanent de type AF/F (non réversible). Un seul aimant, à aimantation réversible, est prévu sur l'un des côtés de la poutre.

Il suffit donc, dans ces nano-commutateurs des figures 10B-10D, de libérer, par action du courant dans un des deux éléments 30 (ou l'élément 30-1), l'aimantation planaire d'un de ces éléments ou de cet élément, pour que le principe d'actionnement selon l'invention fonctionne : des forces d'attraction s'exercent entre les deux aimants constitués par les éléments 30 (ou l'élément 30) et l'élément mobile 50, ce qui permet de réaliser des mouvements de l'élément mobile 50 dans le plan de chacune des figures 10B-10D, suivant la flèche 55. La structure mobile 50 peut donc commuter entre deux positions stables, dans le plan du dispositif. La distance séparant l'élément mobile de chacun des systèmes 30 de l'épaisseur de l'élément 50 est du même ordre de grandeur que h', dans la structure de la figure 7A.

Sont également représentées sur ces figures 10A - 10D, en traits interrompus, les lignes de champ 300-1, 300-2 respectivement des systèmes 30-1, 30-2.

L'utilisation de structures 30 du type de celle de la figure 5A permet, là encore, l'intégration totale du dispositif. Les systèmes 30-1, 30-2 peuvent alors être intégrés dans un substrat fixe, par exemple en Si ou en SiO2, ou solidaires d'un tel substrat.

La figure 11 représente, en vue de dessus, encore une autre configuration, qui met elle aussi en oeuvre deux moyens magnétiques 30, 30' à aimantation dans leur plan, du type de ceux illustrés en figures 5A et 5B, mais disposés bout à bout ou dans le prolongement l'un de l'autre : les deux aimantations rémanentes des deux éléments 30, 30' sont dans un même plan, qui est celui de chacun de ces éléments 30, 30', et sont même sensiblement colinéaires. Elles sont dans un plan parallèle à la surface 53 du substrat 52. Cela permet un mouvement dans le plan de la figure, grâce au torseur qui apparaît lorsque les deux systèmes ont une polarisation opposée.

Ce mode de réalisation présente, comme dans le cas de la figure 8, la particularité que l'élément mobile 50, est constitué de, ou comporte, l'un de ces moyens magnétiques, ici le moyen 30'. L'autre moyen magnétique 30 est dans le substrat 52.

L'un des deux systèmes 30, 30', par exemple celui de l'élément mobile, peut avoir une aimantation fixe : une ligne de courant telle que la ligne 36 (voir figure 5A) n'est alors pas nécessaire, puisqu'une inversion de l'aimantation n'est pas à réaliser au niveau de cette partie. Ce système est alors celui de la figure 5B.

Par contre, le système 30, incorporé dans le substrat 52, présente bien un conducteur 36, qui va pouvoir permettre, suivant les principes déjà décrits ci-dessus, de réaliser une inversion de l'aimantation.

Le mode de réalisation de la figure 11 fonctionne de la manière suivante. Si, par exemple, comme illustré sur la figure 11, les deux éléments ont une aimantation de même orientation (sur la figure : pôle N de chaque élément 30, 30' orienté vers le bas de la figure et pôle S orienté vers le haut de la figure), alors le système global est stable, et la poutre qui comporte l'élément 30 reste immobile. Si la polarité de l'un des deux éléments est inversée, tandis que celle de l'autre est maintenue, l'élément mobile 30 va subir une déflection dans le plan de la figure, comme indiquée par la flèche 55. Les références 300, 300' ont la même signification que sur la figure précédente. Pour les figures 10A-11 les dimensions des différents éléments et notamment de la poutre ou de la plaque, sont du même ordre de grandeur que les structures de la figure 7A; par ailleurs le substrat 52 de ces figures a les mêmes propriétés isolantes que le substrat 52 de la figure 7.

Les modes de réalisation illustrés en figures 13A à 18 sont d'autres modes de réalisation de nano-commutateurs bistables selon l'invention.

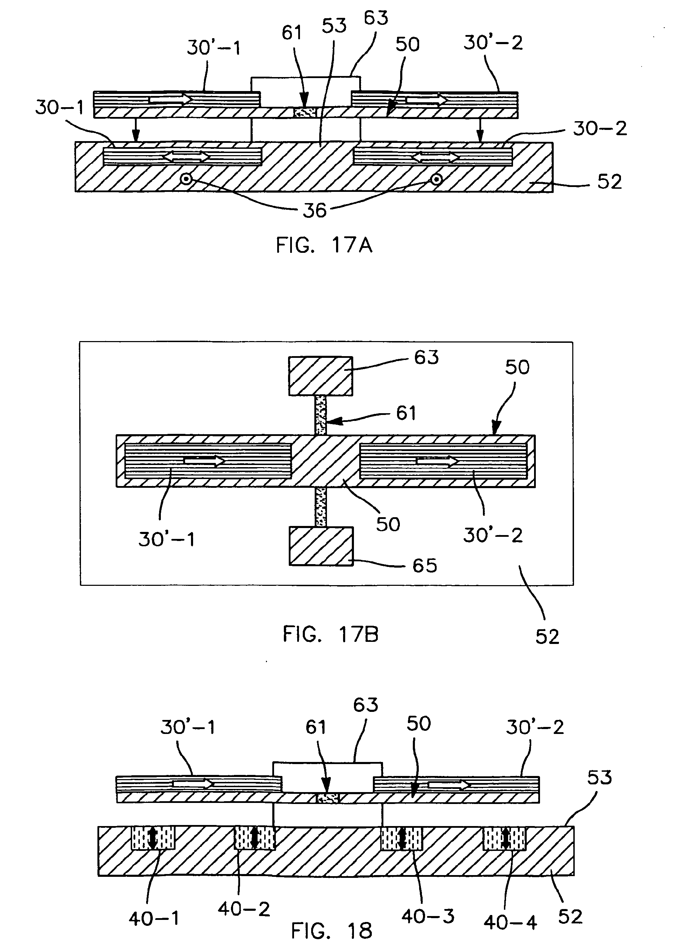

Pour tous ces modes de réalisation, les dimensions, les matériaux, les procédés de réalisation, sont, sauf indication complémentaire ou contraire, ceux qui ont déjà été exposés ci-dessus. Sur les figures suivantes, des références identiques à celles que l'on trouve sur les figures 7A et 7B y désignent des éléments identiques ou similaires. Le fonctionnement de ces dispositifs, et en particulier la commutation de l'élément mobile entre une première position stable et une deuxième position stable résulte, comme pour les modes de réalisation précédents, de l'interaction de moyens magnétiques fixes avec la poutre ou la plaque mobile, ou avec des moyens magnétiques positionnés sur ou dans la poutre ou la plaque mobile, et du renversement de sens de l'aimantation rémanente de l'un des moyens magnétiques, obtenu comme expliqué ci-dessus dans le cadre des modes de réalisation déjà décrits et notamment en liaison avec les figures 5A et 6A. Pour les modes de réalisation des figures 17A à 18, on notera qu'il y a en fait trois positions stables: on peut donc passer d'une première de ces positions stables à une deuxième et enfin à la troisième.

Ainsi la figure 13A représente un dispositif dans lequel le substrat 52 comporte, sensiblement dans un même plan, proche de sa surface 53, à la fois des moyens 40' dont l'aimantation perpendiculaire est irréversible (cas de la figure 6B) et des moyens 30 à aimantation planaire et dont la direction d'aimantation est réversible (son conducteur 36 est également représenté sur cette figure).

La figure 13B représente un dispositif dans lequel le substrat 52 comporte, sensiblement dans un même plan, proche de sa surface 53, à la fois des moyens 40 dont l'aimantation perpendiculaire est réversible (cas de la figure 6A ; le conducteur 36' est également représenté sur la figure 13B) et des moyens 30' à aimantation planaire et dont la direction d'aimantation est irréversible (cas de la figure 5B).

La figure 14 représente un dispositif dans lequel le substrat 52 comporte, sensiblement (mais pas nécessairement) dans un même plan, proche de sa surface 53, à la fois des moyens 30' dont l'aimantation planaire est irréversible (cas de la figure 5B) et des moyens 30 à aimantation planaire et dont la direction d'aimantation est réversible (son conducteur 36 est également représenté sur cette figure).

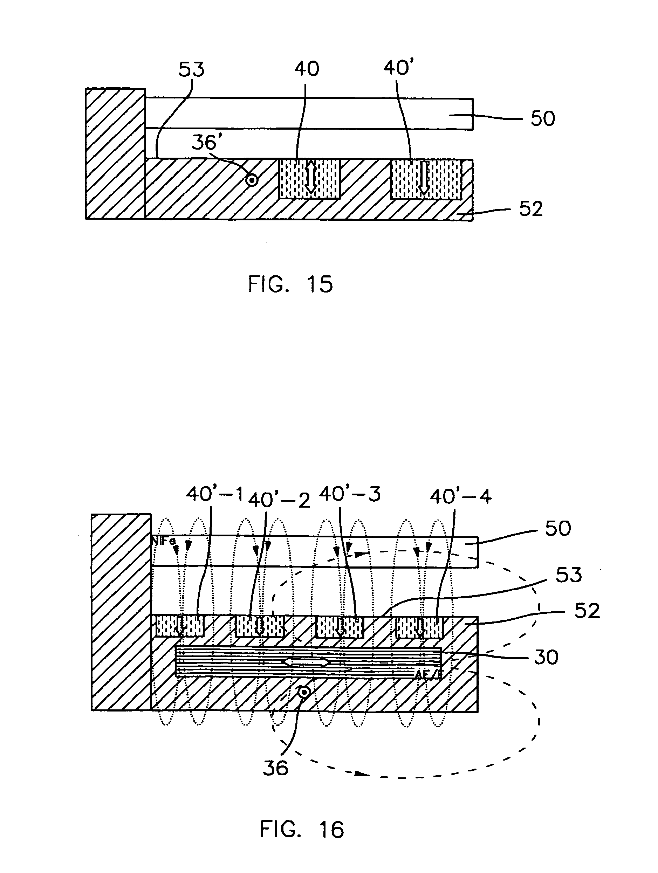

La figure 15 représente un dispositif dans lequel le substrat 52 comporte, sensiblement dans un même plan, proche de sa surface 53, à la fois des moyens 40' dont l'aimantation perpendiculaire est irréversible (cas de la figure 6B) et des moyens 40 à aimantation perpendiculaire et dont la direction d'aimantation est réversible (son conducteur 36' est également représenté sur cette figure).

La figure 16 représente un dispositif dans lequel le substrat 52 comporte, sensiblement dans un même plan, proche de sa surface 53, une pluralité de moyens 40'-1, 40'-2, 40'-3, 40'-4 dont l'aimantation perpendiculaire est irréversible (cas de la figure 6B). L'aimantation de tous ces moyens est dirigée suivant la même direction et le même sens, sensiblement perpendiculaire au substrat 52, afin d'augmenter le champ magnétique vertical. Des moyens 30 à aimantation planaire et dont la direction d'aimantation est réversible (son conducteur 36 est également représenté sur cette figure) sont également disposés dans le substrat 52, sous la pluralité de moyens 40'.

Pour les modes de réalisation des figures 13-15, les dimensions des moyens 30, 30', 40, 40', ainsi que leurs positions respectives, peuvent être adaptées en fonction du contexte et du besoin dans chacun de ces modes de réalisation.

Les figures 17A et 17B représentent, en vue de côté et en vue de dessus, un dispositif de structure différente. La partie mobile 50 (ou plaque, ou poutre) est disposée symétriquement de part et d'autre d'une poutre de torsion 61, elle-même fixe par rapport au substrat 52, auquel elle est reliée par des plots 63, 65 dans lesquels elle est encastrée, et autour duquel elle peut pivoter sous l'action des forces magnétiques qui résultent de moyens magnétiques 30'-1, 30'-2, 30-1, 30-2.

La plaque ou la poutre 50 est de préférence en un matériau non magnétique, les propriétés magnétiques étant assurées par les seuls moyens 30'-1, 30'-2. Au repos, en position stable (celle représentée sur la figure 17A) le gap (distance entre cette poutre 50 et la surface du substrat 52 est sensiblement égal à, ou du même ordre de grandeur que, celui du dispositif de la figure 7A.

Les moyens 30'-1 et 30'-2, associés à la plaque ou poutre 50 (positionnés sur ou dans cette plaque ou poutre) sont du type présenté et décrit ci-dessus en liaison avec la figure 5B, c'est-à-dire à aimantation planaire irréversible.

Les moyens 30-1 et 30-2 sont du type présenté et décrit ci-dessus en liaison avec la figure 5A, c'est-à-dire à aimantation planaire réversible. Ils sont disposés sensiblement dans un même plan, proche de la surface 53 du substrat 52, mais de part et d'autre d'un plan perpendiculaire à la surface 53 et passant par le bras ou l'axe 61. Il leur est associé un conducteur 36, contenu lui aussi dans le substrat 52. Ces moyens 30-1 et 30-2 et leurs conducteurs 36 permettent d'engendrer des aimantations qui, bien que contenues dans le même plan, sensiblement parallèle à la surface 53 du substrat 52, peuvent être de sens opposés. Le torseur exercé par les moyens magnétiques 30-1 et 30-2 intégrés au substrat 52 sur les moyens magnétiques 30'-1 et 30'-2 associés à la plaque ou à la poutre 50 permet de faire pivoter cette dernière autour du bras 61, dans un sens ou dans l'autre.

Comme indiqué sur la figure 17B, ce bras 61 est lui-même relié aux plots ou aux moyens d'encastrement 63,65 qui sont par exemple reliés au substrat fixe 52.

Dans cette structure et celle de la figure 18, la plaque ou poutre 50 peut être basculée autour de l'axe 61 tout en restant raide.

La structure du dispositif de la figure 18 est similaire à celle du dispositif qui vient d'être décrit en liaison avec les figures 17A et 17B.

Mais, dans ce mode de réalisation, le substrat 52 ne comporte pas des aimants à aimantation rémanente planaire, mais une pluralité d'aimants 40-1, 40-2, 40-3, 40-4 à aimantation rémanente perpendiculaire et réversible, du type présenté et décrit ci-dessus en liaison avec la figure 6A. Ils sont disposés sensiblement dans un même plan, proche de la surface 53 du substrat 52. À chacun d'entre eux est associé un conducteur, contenu lui aussi dans le substrat 52, qui permet de renverser l'aimantation de l'élément auquel il est associé.

Ces moyens 40-1, 40-2, 40-3, 40-4 et leurs conducteurs associés permettent d'engendrer des aimantations dirigées de manière sensiblement perpendiculaire à la surface 53 du substrat 52 mais selon des sens opposés de part et d'autre d'un plan, perpendiculaire à la surface 53 et passant par le bras 61 de torsion. Le torseur exercé par les moyens magnétiques 40-1, 40-2, 40-3, 40-4 intégrés au substrat 52 sur les moyens magnétiques 30'-1 et 30'-2 associés à la plaque ou la poutre 50 permet de faire pivoter cette dernière autour du bras 61, dans un sens ou dans l'autre.

Comme dans le cas de la figure 17B, ce bras 61 est lui-même relié à des plots ou des moyens d'encastrement 63,65 qui sont par exemple reliés au substrat fixe 52.

D'une manière générale, un dispositif selon l'invention peut être réalisé par les techniques de dépôt, de gravure de substrat et de gravure de couches sacrificielles de la microélectronique. Ces étapes peuvent être réalisées dans un ordre variable en fonction de la structure finale souhaitée. Pour un nano commutateur avec un gap h' inférieur à 500 nm, on utilise de préférence un procédé de libération de la partie mobile par gravure sèche.

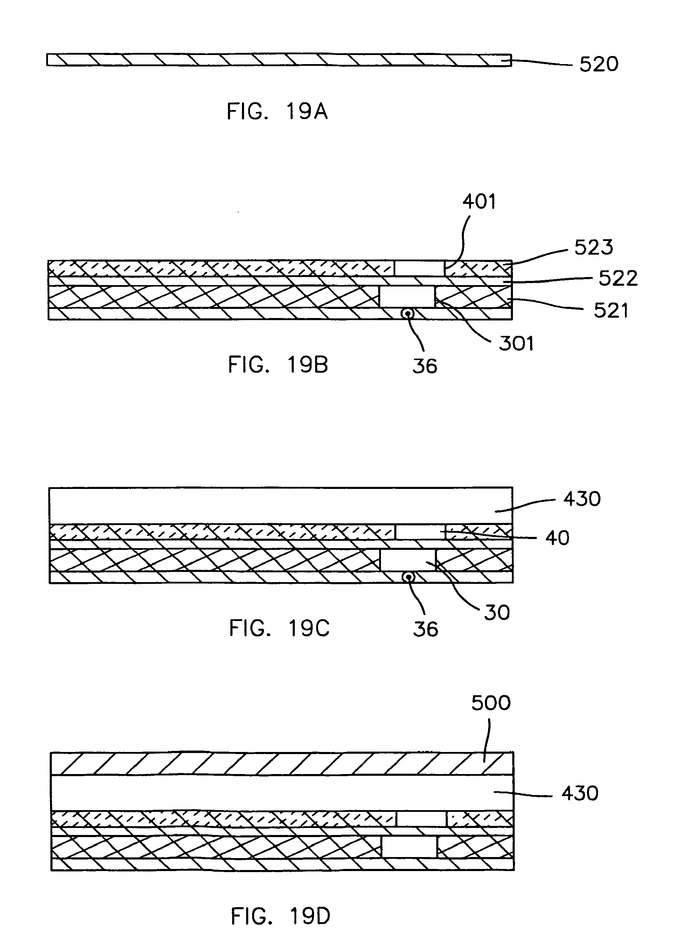

Un premier procédé de réalisation d'un dispositif selon l'invention va maintenant être décrit, en liaison avec les figures 19A à 19D.

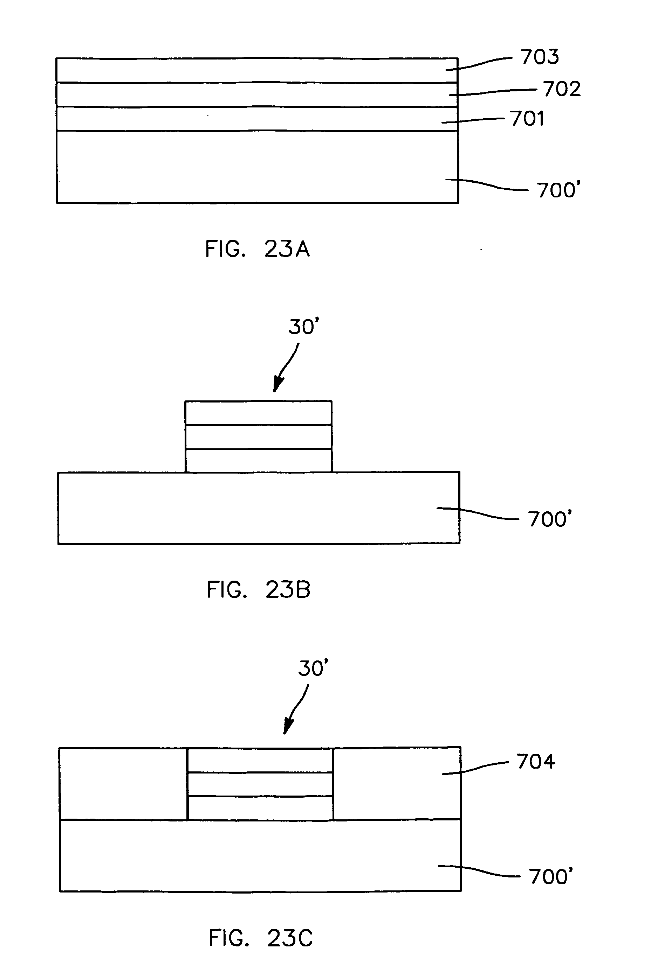

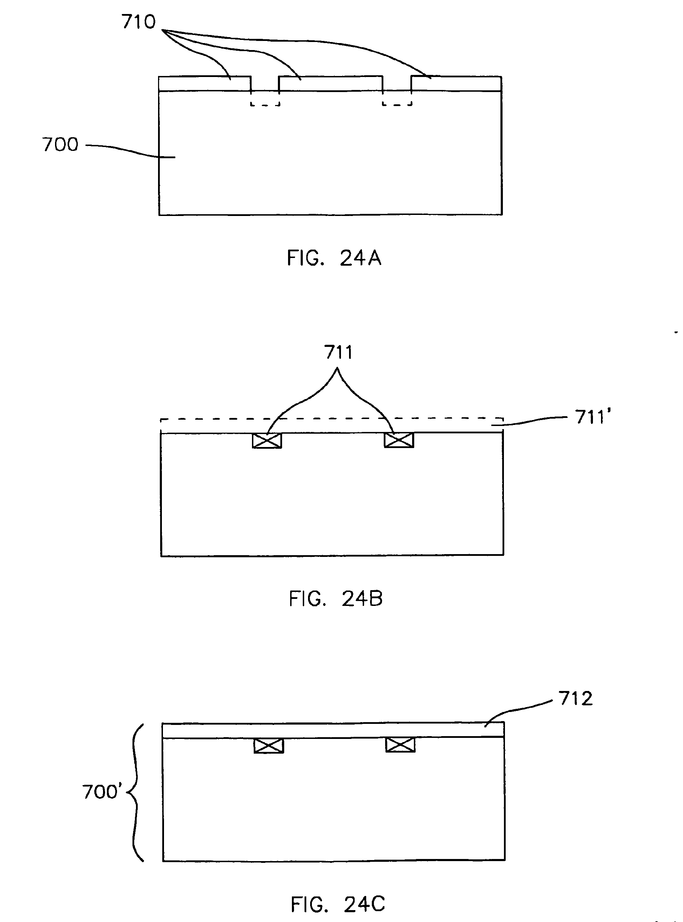

Un procédé de réalisation d'un aimant sur un substrat va d'abord être indiqué spécifiquement en liaison avec les figures 23A - 23C et les figures 24A-24C.

Dans le cas des figures 23A-23C, il s'agit de la réalisation d'un aimant dont l'aimantation n'est pas réversible. On prend l'exemple d'un aimant 30' comme expliqué ci-dessus en liaison avec la figure 5B, mais il pourrait aussi bien s'agir d'un empilement de type 40' (figure 6B).

Sur un substrat 700', on procède à un empilement de couches 701, 702, 703 qui permettront de former, au final, l'élément avec les propriétés magnétiques souhaitées. Des exemples de compositions d'aimants pour l'invention ont déjà été donnés ci-dessus. 3 couches sont indiqués ici, mais il pourrait s'agir d'un nombre quelconque de couches, inférieur ou supérieur à 3. Le substrat 700' peut être homogène ou hétérogène, par exemple comporter une pluralité de couches ou avoir subi des opérations de dépôt et/ou de gravure.

L'ensemble de couches 701, 702, 703 est gravé (voir figure 23B) afin de donner à l'aimant 30' la forme souhaitée.

L'aimant peut ensuite être enrobé dans un matériau d'enrobage 704, par exemple du dioxyde de silicium (voir figure 23C).

Pour le cas où un ou des éléments conducteurs (tels que les éléments 36, 36', 37 des figures 5 ou 6) devraient être formés, on pourra mettre préalablement en oeuvre une série d'étapes telles que celles illustrées sur les figures 24A-24C.

Partant d'un substrat 700, par exemple en dioxyde de silicium, on réalise une étape de gravure à l'aide d'un masque 710 (figures 24A). Cette étape permet de définir les zones dans lesquelles les conducteurs vont être réalisés. Puis (figures 24B) un matériau conducteur 711 est déposé dans les zones gravées. Éventuellement, une couche 711' de ce matériau que l'opération de dépôt aurait déposée sur l'ensemble du substrat peut être éliminée par polissage. La structure obtenue peut ensuite être recouverte d'une couche 712 isolante, par exemple une couche de dioxyde de silicium (voir figure 24C). L'exemple qui vient d'être donné permet de réaliser des conducteurs 711 qui sont à la même profondeur dans le substrat 700, mais il est possible de réaliser par des étapes successives de dépôt, puis de gravure, des conducteurs à des niveaux différents dans le substrat 700. Le substrat 700 peut être lui aussi homogène ou hétérogène, par exemple comporter une pluralité de couches ou avoir subi des opérations de dépôt et/ou de gravure.

L'ensemble obtenu constitue un substrat 700' sur lequel les opérations des figures 23A-23C peuvent ensuite être réalisées. On obtiendra alors un aimant 30,40, respectivement du type de la figure 5A ou 6A.

Ces procédés de réalisation des aimants vont pouvoir être utilisés dans les procédés de réalisation d'un dispositif selon l'invention, qui vont maintenant être décrits.

On prendra d'abord l'exemple du dispositif de la figure 7A.

Partant d'un substrat 520 (figure 19A) en un matériau tel que le dioxyde de silicium SiO2 ou encore en Si/SiO2 (couche de SiO2 sur un substrat en Si), on réalise (figure 19B) un dépôt successif de couches 521, 522, 523 sur ou dans lesquelles des aimants 30, 40 vont pouvoir être formés, par exemple selon l'un des procédés décrits en liaison avec les figures 24A - 25C. Les couches 521, 522, 523 sont par exemple des couches en matériaux magnétiques, qui sont ensuite gravées. Les aimants réalisés peuvent être ensuite enrobées par un matériau tel que le dioxyde de silicium SiO2. Au cours de ces étapes peuvent également être réalisés les moyens conducteurs 36, également par gravure de couche et dépôt de matériau conducteur.

Les dépôts ont lieu par exemple par pulvérisation cathodique.

Une couche sacrificielle 430 (figure 19C) est ensuite formée sur cet ensemble, puis (figure 19D) une couche 500 d'un matériau dans lequel la poutre 50 sera formée (par exemple matériau magnétique doux). Cette couche est gravée pour donner à la poutre 50 la forme et les dimensions souhaitées.

On procède ensuite à l'élimination de la couche sacrificielle 430 par des techniques de gravure sélective, pour libérer la poutre 50. Le dispositif final de la figure 7A est finalement obtenu. Le socle 51 est obtenu par arrêt de la gravure au temps, ce qui permet de laisser des endroits où la couche sacrificielle n'est pas éliminée. On peut aussi, en variante, localiser préalablement la couche sacrificielle sous la poutre.

Ce procédé peut être adapté pour la réalisation de toute structure selon l'invention. Par exemple, pour une structure telle que celle de la figure 8, la poutre 50 sera formée par dépôt de couches d'aimants, par exemple par pulvérisation cathodique, sur la couche sacrificielle 430 ou avantageusement sur un matériau structurant la poutre. Comme expliqué ci-dessus, cette dernière est ensuite éliminée, puis le socle 51 est dégagé.

Pour une structure telle que celle des figures 17A-18, on réalise en outre une gravure permettant de former les plots 63, 65. Ou bien ces plots sont réalisés de la même manière qu'expliqué ci-dessus pour l'encastrement d'une poutre (gravure au temps ou localisation préalable de la couche sacrificielle).

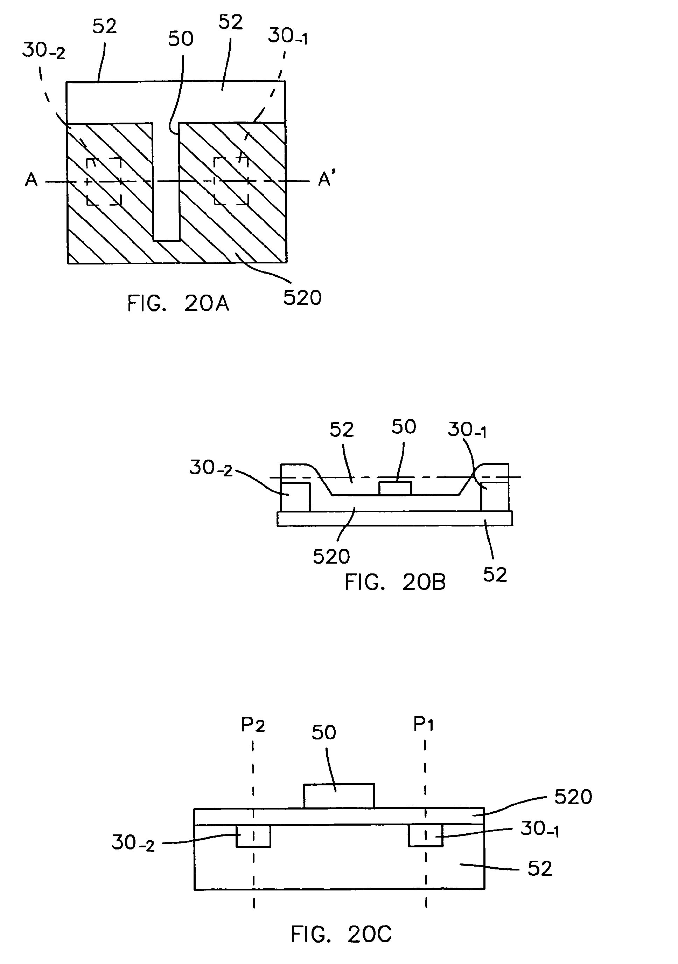

Pour une structure telle que celle des figures 10A-10D, on grave une poutre 50 dans une couche déposée sur une couche sacrificielle 520. Cette couche sacrificielle a elle-même été formée sur un substrat 52, sur lequel des moyens magnétiques 30-1, 30-2 ont été préalablement réalisés (figures 20A et 20B, cette deuxième figure étant une vue en coupe selon AA' de la figure 20A, qui est une vue de dessus). La couche sacrificielle 520 peut ensuite être éliminée par gravure pour libérer la poutre 50 par rapport aux moyens magnétiques. Celle-ci aura donc un mouvement dans le plan défini par les moyens magnétiques.

La figure 20C est une variante dans laquelle les moyens magnétiques et les éventuels conducteurs enterrés (non représentés) sont réalisés dans le substrat 52. Puis une couche sacrificielle 520 est déposée sur la structure ainsi obtenue. Sur cette couche, la poutre 50 est formée par dépôt et gravure. La couche sacrificielle 520 peut ensuite être éliminée.

Dans les deux cas, les moyens magnétiques peuvent être formés comme expliqué ci-dessus en liaison avec les figures 23A-23C.

On obtient ainsi un dispositif pour lequel le mouvement de la poutre 50 s'effectue dans le plan des moyens magnétiques 30-1, 30-2 (figure 20B) ou dans un plan parallèle à ces moyens magnétiques 30-1, 30-2 (figure 20C), selon les aimantations rémanentes respectives des moyens magnétiques 30-1, 30-2, ce qui correspond à la structure des figures 10A-10D.

Dans un cas (figure 20B) les deux aimants sont dans le même plan que l'élément mobile, et le mouvement de ce dernier a lieu entre ces deux aimants.

Dans l'autre cas (figure 20C) on forme deux aimants dans le substrat. Puis, au cours des étapes suivantes, on forme un élément mobile dans un plan parallèle à celui dans lequel les aimants ont été formés, de sorte que son mouvement aura lieu dans ce plan de l'élément mobile, entre deux positions limites définies par des plans P1, P2 perpendiculaires au substrat 52 et passant par les aimants.

On obtient ainsi des dispositifs à structure planaire.

Les mêmes techniques peuvent être mises en oeuvre pour réaliser une structure planaire telle que celle de la figure 11. La différence réside dans la formation des zones en matériaux magnétiques, mais pour cela on adapte la géométrie de ces zones dans le procédé des figures 23A-24C.

Dans tous les exemples donnés ci-dessus, une ou des couches d'arrêt de gravure (non représentées sur les figures) peuvent être disposées en vue de la gravure d'une couche déposée sur cette couche d'arrêt.

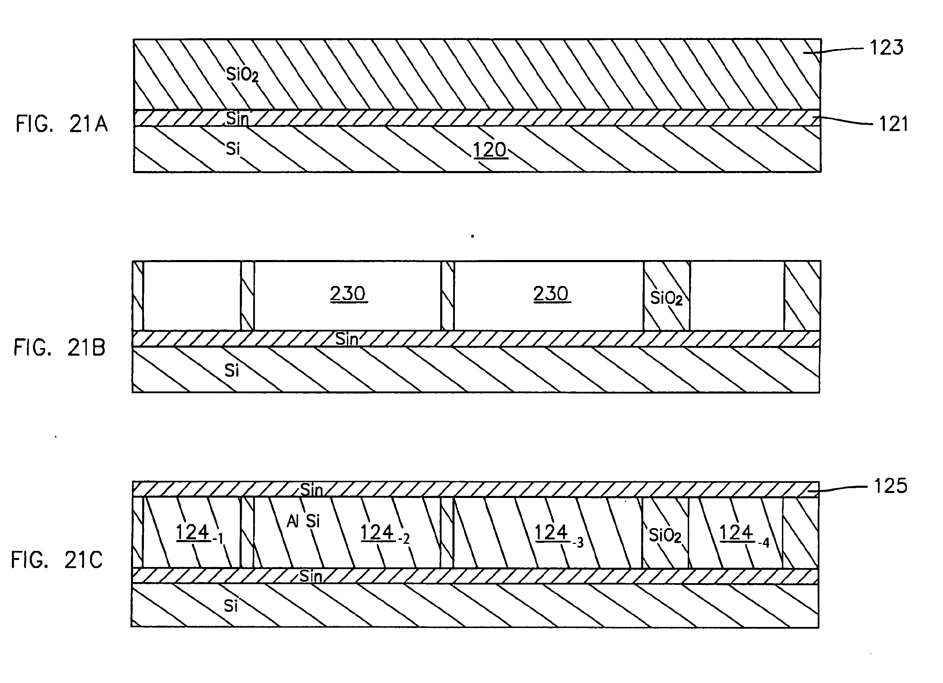

Encore un autre exemple de procédé de réalisation d'un dispositif selon l'invention va être décrit, en liaison avec les figures 21A-21I.

On réalise (figure 21A) sur un substrat 120 en silicium (épaisseur par exemple 500 µm), un dépôt 121 d'une couche d'arrêt de gravure, par exemple de SiN de 40 nm d'épaisseur environ, puis un dépôt 123 d'oxyde, par exemple de 2 µm d'épaisseur.

On procède à une étape de lithographie puis de gravure humide de la couche 123 d'oxyde, avec arrêt sur la couche de SiN. Sont ainsi réalisées des zones gravées 230 dans lesquelles des dépôts 124-1, 124-2, 124-3, 124-4 de AlSi peuvent être réalisés, par exemple par pulvérisation puis polissage mécanochimique avec arrêt sur la couche d'oxyde 123 (figure 21B). Les dépôts 124-1, 124-3 AlSi forment le conducteur métallique pour ligne de chauffage, et les dépôts 124-2, 124-4 AlSi forment le conducteur de génération du champ magnétique. Il est ensuite procédé, sur l'ensemble de la structure, à un nouveau dépôt 125 de nitrure de silicium, par exemple d'épaisseur 40 nm. Ce dépôt 125 formera une isolation de la ligne de génération de champ magnétique par rapport à la couche 126 de TiN. On aboutit donc à la structure de la figure 21C.

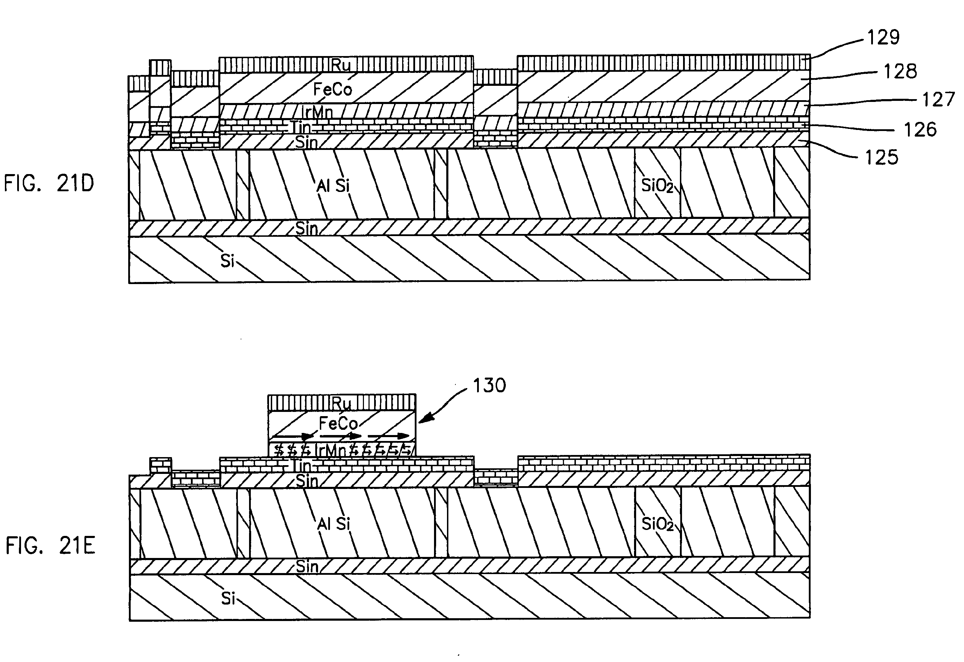

La couche 125 peut ensuite être gravée puis recouverte d'une couche 126 de nitrure de titane TiN, sur laquelle un empilement comportant une couche en IrMn 127 (d'épaisseur par exemple 50 nm), une couche en FeCo 128 (épaisseur par exemple 100 nm) et une couche 129 d'un matériau tel que le ruthénium (Ru) (épaisseur par exemple 50 nm)est déposé (figure 21D).

Par lithographie par masquage, un aimant 130 est défini dans l'empilement de couches 127-128-129 (figure 21E).

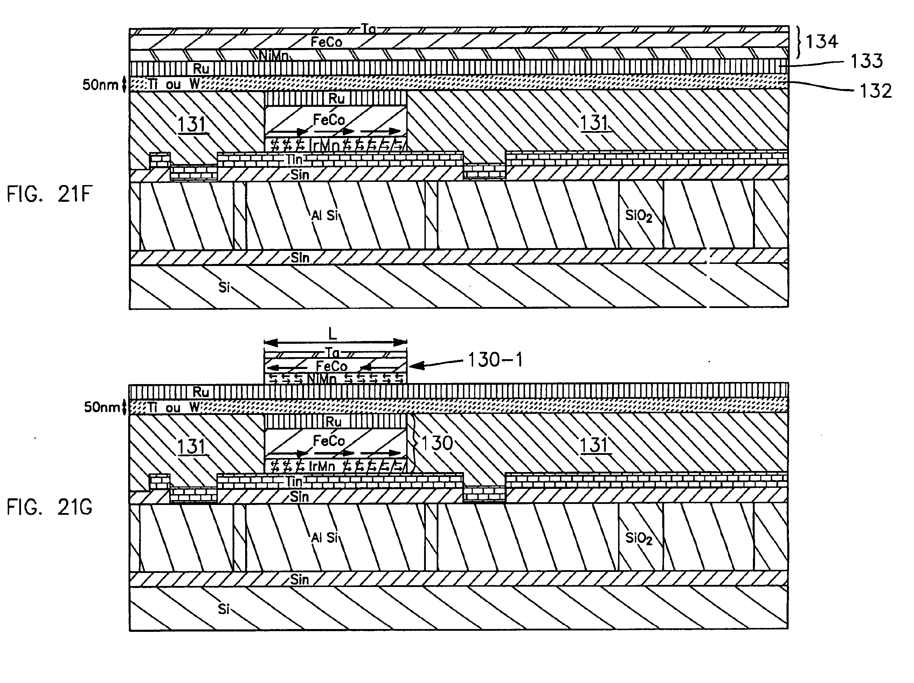

Cet aimant est ensuite enrobé latéralement dans une couche de dioxyde de silicium SiO2 131, puis l'ensemble est recouvert d'une couche 132 de titane ou de tungstène puis d'une couche de ruthénium 133 ; sur cette dernière il est procédé à un dépôt 134 d'un empilement de couches, successivement et dans cet ordre, en NiMn, en FeCO, et en Ta (figure 21F).

Par lithographie par masquage, un deuxième aimant 130-1 est défini dans l'empilement 134 (figure 21G). Il a par exemple une longueur L sensiblement d'environ 6 µm.

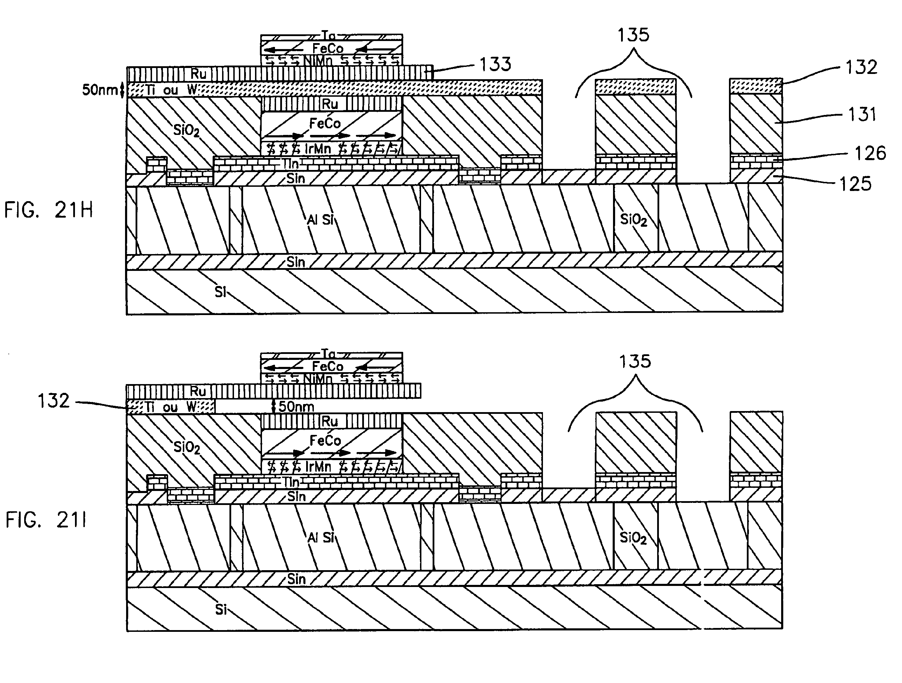

Enfin, la couche 133, qui est par exemple en ruthénium ou en platine ou en aluminium, est gravée (figure 21H), pour obtenir la forme souhaitée de l'élément mobile et de son encastrement. Il est ensuite possible de graver des cavités 135 dans les couches 131, 126, 125, avec arrêt de la gravure sur le matériau 124 (AlSi) (figure 21I) (pour prendre des contacts sur ce matériau), puis de libérer cette couche 133 par gravure de la couche 132. Le gap est défini par l'épaisseur de la couche 132 qui a été éliminée pour libérer la couche 133. Au final, la structure obtenue correspond sensiblement à celle qui a été décrite ci-dessus en liaison avec la figure 9. Les autres modes de réalisation peuvent être obtenus par l'application des mêmes techniques de dépôt et de gravure.

Parmi les applications possibles de l'invention, on peut citer les suivantes.

Tout d'abord, les interrupteurs d'alimentation pour circuit basse consommation, qui servent à réduire la consommation des circuits en coupant l'arrivée des tensions et courants d'alimentation afin de supprimer les courants de fuite. Pour cette technique, utile notamment pour les applications nomades, il est avantageux que les interrupteurs eux-mêmes présentent un faible courant de fuite. Les nano-commutateurs sont donc des candidats intéressants par rapport aux interrupteurs MOS classiques.

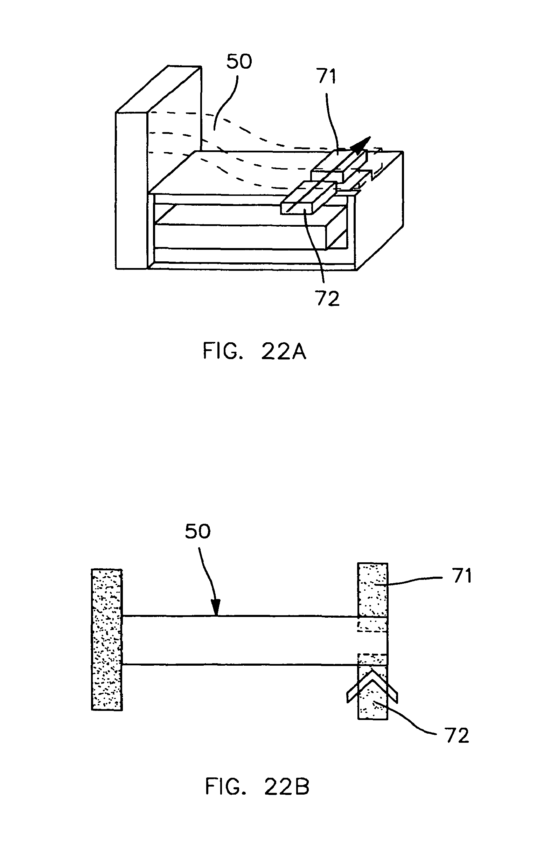

Les figures 22A et 22B représentent, respectivement en vue de ¾ et de dessus, un nano-commutateur selon l'invention utilisé en tant qu'interrupteur en configuration série : lorsqu'il est en position fermée, il ferme une ligne de courant 71, 72 qui était ouverte. C'est la poutre 50 qui vient faire le contact entre des portions de ces deux lignes, disposées sur le substrat 52. On peut également utiliser le nano-commutateur en configuration parallèle, en faisant passer le signal par l'élément mobile.

Les convertisseurs DC/DC, qui permettent de transposer l'énergie disponible d'une source donnée dans une forme utilisable par sa charge, sont un autre domaine d'application possible de l'invention. Le fonctionnement de ces convertisseurs est basé sur le hachage de l'énergie de la source au moyen d'interrupteurs. Là encore, les nano-commutateurs peuvent avantageusement remplacer les transistors MOS, dont les tailles (imposées par un compromis entre la nécessité d'avoir une résistance assez faible à l'état conducteur et une capacité équivalente également faible) restent importantes.

L'invention peut également être avantageusement appliquée aux circuits à capacités commutées, qui sont une catégorie importante des circuits de traitement du signal à caractère analogique. Ces circuits utilisent des interrupteurs intégrés dans la même technologie que les capacités, et qui sont actuellement réalisés avec des CMOS. Mais certains phénomènes, dus à ces CMOS, en dégradent les performances, comme la réduction de la bande passante et des phénomènes de distorsion, problèmes qui pourraient être évités par l'utilisation de nano-commutateurs selon l'invention.

L'invention trouve également applications dans le domaine de la testabilité des circuits intégrés analogiques, testabilité qui est dépendante du nombre d'entrées/sorties. Ce nombre influe sur le coût lié à l'utilisation de la surface du silicium, au packaging et aux opérations de tests. Lorsque cela est possible, et afin de réduire le nombre d'entrées/sorties, on utilise un multiplexage de signaux analogiques d'entrée et de sortie, au moyen de portes de transmission MOS. L'utilisation de nano-commutateurs est, là encore, avantageuse en terme de taille et de performance.

L'invention peut également être appliquée aux mémoires nano-mécaniques dans lesquelles un bit d'information est représenté par l'état mécanique d'un élément. On exploite alors la propriété de bistabilité, pour représenter un 0 ou un 1, non volatile afin de conserver l'information sans apport d'énergie.

Enfin, on peut citer d'autres domaines d'applications, telles que les commutateurs RF, ou bien tout autre système tel que les commutateurs ON/OFF, ou les actionneurs pour membranes déformables.

Un exemple de procédé pour la réalisation d'un dispositif selon l'invention, tel que décrit ci-dessus, met en oeuvre :
a) une étape de formation, sur ou dans un substrat, homogène ou pas, d'un ou plusieurs moyens magnétiques, de forme plane, à aimantation planaire ou perpendiculaire, et éventuellement de moyens de renversement de l'aimantation d'au moins un desdits moyens magnétiques;
b) la formation d'une première couche sacrificielle sur ce substrat,
c) la formation d'une deuxième couche, en un matériau constitutif de l'élément mobile, sur ladite première couche sacrificielle,
d) éventuellement, la formation d'un ou plusieurs moyens magnétiques de forme plane, à aimantation planaire ou perpendiculaire, sur ou dans cette deuxième couche,
e) la gravure de la deuxième couche et l'élimination de la première couche sacrificielle, pour former puis dégager l'élément mobile.

Une ou des étapes de polissage peuvent être mises en oeuvre pour polir une ou plusieurs couches ou substrats.

Au cours de l'étape a), on peut former deux aimants sur le substrat. Ces deux aimants sont donc dans un même plan. Puis, au cours des étapes suivantes, on peut former un élément mobile entre ces deux aimants, et dont le mouvement aura lieu entre ces deux aimants. On obtient ainsi un dispositif à structure planaire.

En variante, au cours de l'étape a), on peut former deux aimants dans le substrat. Puis, au cours des étapes suivantes, on peut former un élément mobile dans un plan parallèle à celui dans lequel les aimants ont été formés, dit plan de élément mobile, de sorte que le mouvement de cet élément mobile aura lieu dans ce plan de l'éléments mobile, entre deux positions limites définies par des plans perpendiculaires au substrat et passant par les aimants. On obtient, là encore, un dispositif à structure planaire.

## Revendications

1. Dispositif nano-commutateur comportant:
- au moins un élément fixe (52) et au moins un élément au moins partiellement en un matériau magnétique et mobile (50) par rapport à l'élément fixe,
- des moyens d'activation de l'élément mobile, comportant :
- au moins un premier moyen magnétique (30, 30') de forme plane, définissant un premier plan, pour engendrer une aimantation rémanente selon une direction contenue dans ledit premier plan ou perpendiculaire à ce premier plan,
- et au moins un deuxième moyen magnétique (40, 40') de forme plane, définissant un deuxième plan, pour engendrer une aimantation rémanente selon une direction contenue dans ledit deuxième plan ou perpendiculaire à ce deuxième plan, **caractérisé par**
- des moyens (36, 36') pour inverser, par effet thermique, la direction de l'aimantation rémanente d'au moins un desdits premier et deuxième moyens magnétiques.

2. Dispositif selon la revendication 1, les premier et deuxième moyens magnétiques faisant partie de l'élément fixe.

3. Dispositif selon la revendication 2, le ou les premiers moyens magnétiques étant à aimantation rémanente fixe selon une direction contenue dans ledit premier plan.

4. Dispositif selon la revendication 3, le ou les deuxièmes moyens magnétiques étant à aimantation rémanente pouvant être inversée, selon une direction contenue dans ledit deuxième plan, ou
le ou les deuxièmes moyens magnétiques (40) étant à aimantation rémanente pouvant être inversée, selon une direction perpendiculaire audit deuxième plan.

5. Dispositif selon la revendication 2, le ou les deuxièmes moyens magnétiques (40', 40'-1, 40'-2, 40'-3, 40'-4) étant à aimantation rémanente fixe selon une direction perpendiculaire audit deuxième plan,
le ou les premiers moyens magnétiques (30) pouvant être à aimantation rémanente variable selon une direction contenue dans ledit premier plan.

6. Dispositif selon la revendication 5, le ou les premiers moyens magnétiques (30) étant à aimantation rémanente variable selon une direction contenue dans ledit premier plan, le dispositif comportant une pluralité de deuxièmes moyens magnétiques (40'-1, 40'-2, 40'-3, 40'-4) à aimantation rémanente fixe selon une direction perpendiculaire audit premier plan.

7. Dispositif selon la revendication 1 , l'élément mobile comportant le ou les premiers moyens magnétiques (30', 30'-1, 30'-2), le ou les deuxièmes moyens magnétiques faisant partie de l'élément fixe.

8. Dispositif selon la revendication 7, le ou les premiers moyens magnétiques (30', 30'-1, 30'-2) étant à aimantation rémanente fixe selon une direction contenue dans ledit premier plan et/ou :
- le ou les deuxièmes moyens magnétiques (30',30'-1, 30'-2) étant à aimantation rémanente variable, selon une direction perpendiculaire audit deuxième plan,
- ou le ou les deuxièmes moyens magnétiques (30', 30'-1, 30'-2) étant à aimantation rémanente variable, selon une direction contenue dans ledit deuxième plan.

9. Dispositif selon la revendication 8, le ou les deuxièmes moyens magnétiques (30', 30'-1, 30'-2) étant à aimantation rémanente variable, selon une direction contenue dans ledit deuxième plan, et les premiers et deuxième moyens magnétiques étant disposés dans le prolongement l'un de l'autre lorsque la partie mobile est en position de repos.

10. Dispositif selon l'une des revendications 7 à 8, comportant un axe de rotation (61) autour duquel une première partie et une deuxième partie de l'élément mobile (50) peuvent pivoter, chaque partie de cet élément mobile comportant au moins un premier moyen magnétique (30'-1, 30'-2), l'élément fixe comportant au moins un deuxième moyen magnétique (30-1, 30-2, 40-1, 40-2, 40-3, 40-4), chacun étant disposé pour coopérer avec un premier moyen magnétique de l'élément mobile.

11. Dispositif selon la revendication 2, la partie mobile (50) étant disposée dans le même plan que les premiers et deuxièmes moyens magnétiques (30, 30', 40, 40') et étant mobile dans ce plan, ou
la partie mobile (50) étant disposée, et mobile, dans un plan parallèle à un plan défini par les premiers et deuxièmes moyens magnétiques (30, 30', 40, 40').

12. Dispositif selon la revendication 11, les premiers et deuxièmes moyens magnétiques (30, 30') étant à aimantation rémanente selon une direction contenue dans leur plan, au moins une de ces aimantations étant variable.

13. Dispositif selon l'une des revendications 1 à 12, au moins un moyen magnétique à aimantation rémanente perpendiculaire à son plan comportant un empilement de multicouches CoPt et au moins une couche (34, 34') d'un matériau antiferromagnétique et/ou
au moins un moyen magnétique à aimantation rémanente selon une direction contenue dans son plan, ou moyen magnétique à aimantation planaire, comportant au moins une couche (32) de matériau ferromagnétique et au moins une couche (34) d'un matériau antiferromagnétique.

14. Dispositif selon l'une des revendications 1 à 13, dans lequel au moins l'un desdits premiers ou deuxièmes moyens magnétiques comprend un empilement de couches, par exemple
une alternance d'au moins une couche magnétique (F) et d'au moins une couche antiferromagnétique (AF).

15. Dispositif selon l'une quelconque des revendications précédentes, au moins l'un desdits premiers ou deuxièmes moyens magnétiques étant à aimantation réversible et étant associé à des moyens (36,37) de retournement de l'aimantation.

## Claims

1. Nanoswitch device comprising:
- at least one stationary element and at least one element which is at least partially made of a magnetic material and which is movable with respect to the stationary element,
- means of activating the movable element, comprising:
- at least one first magnetic means having a planar shape, defining a first plane, in order to generate remanent magnetization in a direction contained within said first plane or perpendicular to this first plane,
- and at least one second magnetic means having a planar shape, defining a second plane, in order to generate remanent magnetization in a direction contained within said second plane or perpendicular to this second plane,
**Characterized by**:
- means for reversing, by a thermal effect, the direction of the remanent magnetization of at least one of said first and second magnetic means.

2. Device as claimed in claim 1, the first and second magnetic means being part of the stationary element.

3. Device of claim 2, the first magnetic means having remanent magnetic magnetization fixed in one direction contained in said first plane.

4. Device of claim 3, the second magnetic means having remanent magnetization capable of being reversed, in a direction contained in said second plane, or the second magnetic means having remanent magnetization capable of being reversed, in a direction perpendicular to said plane.

5. Device of claim 3, the second magnetic means having remanent magnetization fixed in a direction perpendicular to said plane, the first magnetic means possibly having variable remanent magnetization in a direction contained in said first plane.

6. Device of claim 5, the first magnetic means having variable remanent magnetization in a direction contained in said first plane, the device comprising a plurality of second magnetic means having remanent magnetization fixed in a direction perpendicular to said first plane.

7. Device as claimed in claim 1, the movable element comprising the first magnetic means, the second magnetic means being part of the stationary element.

8. Device of claim 7, the first magnetic means having remanent magnetization fixed in a direction contained in said first plane and/or :
- the second magnetic means, having variable remanent magnetization, in a direction perpendicular to said second plane;
- or the second magnetic means having variable remanent magnetization, in a direction contained in said second plane.

9. Device of claim 8, the second magnetic means having variable remanent magnetization, in a direction contained in said second plane, and the first and second magnetic means being arranged in line with one another when the movable portion is in the position of rest.

10. Device as claimed in claims 7 or 8, comprising an axis of rotation about which a first portion and a second portion of the movable element are capable of pivoting, each portion of this movable element comprising at least one first magnetic means, the stationary element comprising at least one second magnetic means, each being arranged so as to cooperate with a first magnetic means of the movable element.

11. Device of claim 3, the movable portion being arranged in the same plane as the first and second magnetic means and being movable within this plane or the movable portion being arranged and movable within a plane parallel to the plane defined by the first and second magnetic means.

12. Device as claimed in claim 11, the first and second magnetic means having remanent magnetization in a direction contained in the plane thereof, at least one of these magnetizations being variable.

13. Device as claimed in any of claims 1 to 12, at least one magnetic means having remanent magnetization perpendicular to the plane thereof comprising a stack of multilayer CoPt and at least one layer of an antiferromagnetic material and/or at least one magnetic means having remanent magnetization in a direction contained in the plane thereof, or a magnetic means having planar magnetization, comprising at least one layer of a ferromagnetic material and at least one layer of an antiferromagnetic material.

14. Device as claimed in any of claims 1 to 13, in which at least one of said first or second magnetic means includes a stack of layers, for example an alternation of at least one magnetic layer (F) and at least one antiferromagnetic layer (AF).

15. Device as claimed in any of claims 1 to 14, at least one of said first and second magnetic means having reversible magnetization and being associated with means for reversing the magnetization.

## Patentansprüche

1. Nano-Schakter-Vorrichtung umfassend:
- wenigstens ein fest angeordnetes Element ('Festelement') (52) und wenigstens ein Element (50), das wenigstens teilweise aus einem magnetischen Material besteht und relativ bezüglich dem Festelement beweglich ist,
- Mittel zur Betätigung des beweglichen Elements, wobei diese umfassen:
- wenigstens ein eine erste Ebene definierendes erstes magnetisches Mittel (30, 30') von ebener Form, zur Erzeugung einer remanenten Magnetisierung gemäß einer Richtung, die in der genannten ersten Ebene enthalten ist oder senkrecht zu sieser ersten Ebene ist,
- und wenigstens ein eine zweite Ebene definierendes magnetisches Mittel (40, 40') von ebener Form, zur Erzeugung einer remanenten Magnetisierung gemäß einer Richtung, die in der genanntenzweiten Ebene enthalten ist oder senkrecht zu dieser zweiten Ebene ist, **gekennzeichnet durch**
- Mittel (36, 36'), um mittels thermischem Effekt die Richtung der Remanenzmagnetisierung wenigstens eines der genannten ersten und zweiten magnetischen Mittel umzukehren.

2. Vorrichtung nach Anspruch 1, bei welcher die ersten und zweiten magnetischen Mittel ein Teil des feststehend angeordneten Elements ('Festele-ments') sind.

3. Vorrichtung nach Anspruch 2, bei welcher das oder die erste(n) magnetische(n) Mittel eine feste Remanenezmagnetisierung gemäß einer in der genannten ersten Ebene enthaltenen Richtung aufweist bzw. aufweisen.

4. Vorrichtung nach Anspruch 3, bei welcher das oder die zweite(n) magnetische(n) Mittel eine umkehrbare Remanenzmagnetisierung gemäß einer in der genanntenzweiten Ebene liegenden Richtung aufweist bzw. aufweisen, oder
bei welcher das oder die zweite(n) magnetische(n) Mittel (40) eine umkehrbare Remanenzmagnetisierung gemäß einer zu der genannten zweiten Ebene senkrechten Richtung aufweist bzw. aufweisen.

5. Vorrichtung nach Anspruch 2, bei welcher das oder die zweite(n) magnetische(n) Mittel (40', 40'-1, 40"- 2, 40'- 3, 40'-4) eine feste Remanenzmagnetisierung gemäß einer zu der genannten zweiten Ebene senkrehcten Richtung aufweist bzw. aufweisen,
wobei das oder die erste(n) magnetische(n) Mittel (30) eine variable Remanenzmagnetisierung gemäß einer in der genannten ersten Ebene enthaltenen Richtung aufweisen kann bzw. können.

6. Vorrichtung nach Anspruch 5, bei welcher das oder die erste(n) magnetische(n) Mittel (30) eine variable Remanenzmagnetisierung gemäß einer in der genannten ersten Ebene enthaltenen Richtung aufweist bzw. aufweisen, wobei die Vorrichtung eine Mehrzahl von zweiten magnetischen Mitteln (40'-1, 40'- 2, 40'- 3, 40'- 4) mit einer festen Remanenzmagnetisierung gemäß einer zu der genannten ersten Ebene senkrechten Richtung umfasst.

7. Vorrichtung nach Ansprich 1, bei welcher das bewegliche Element das oder die erste(n) magnetische(n) Mittel (30', 30'-1, 30'-2) umfasst, wobei das oder die erste(n) magnetische(n) Mittel Teil des fest angeordneten Elements ('Festelements') ist bzw. sind.

8. Vorrichtung nach Anspruch 7, bei welcher das oder die erste(n) magnetische(n) Mittel (30', 30'-1, 30'-2) eine feste Remanenzmagnetisierung gemäß einer in der genannten ersten Ebene enthaltenen Richtung aufweist bzw. aufweisen, und/oder bei welcher
- das oder die zweite(n) magnetische(n) Mittel eine variable Remanenzmagnetisierung gemäß einer zu der zweiten Ebene senkrechten Richtung aufweist bzw. aufweisen,
- oder das oder die zweite(n) magnetische(n) Mittel (30', 30'-1, 30'- 2) eine variable Remanenzmagnetisierung gemäß einer in der genannten zweiten Ebene enthaltenen Richtung aufweist bzw. aufweisen.

9. Vorrichtung nach Anspruch 8, bei welcher das oder die zweite(n) magnetische(n) Mittel (30', 30'-1, 30'-2) eine variable Remanenzmagnetisierung gemäß einer in der genannten zweiten Ebene enthaltenen Richtung aufweist bzw. aufweisen und bei welcher die ersten und die zweiten magnetischen Mittel in der Verlängerung voneinander angeordnet sind, wenn sich das bewegliche Teil in seiner Ruhestellung befindet.

10. Vorrichtung nach einem der Ansprüche 7 bis 8, welche eine Drehachse (61) umfasst, um welche ein erstes Teil und ein zweites Teil des beweglichen Elements schwenkbar sind, wobei jedes Teil dieses beweglichen Elements wenigstens ein erstes magnetisches Mittel (30'-1, 30'-2) umfasst und das fest angeordnete Element ('Festelement') wenigstens ein zweites magnetisches Mittel (30-1, 30-2, 40-1, 40-2, 40-3, 40-4) umfasst und jedes jeweils zum Zusammenwirken mit einem ersten magnetischen Mittel des beweglichen Elements angeordnet ist,

11. Vorrichtung nach Anspruch 2, bei welcher das bewegliche Teil (50) in derselben Ebene wie die ersten und zweiten magnetischen Mittel (30, 30', 40, 40') angeordnet und in dieser Ebene beweglich sind, oder
- bei welcher das bewegliche Teil (50) in einer Ebene angeordnet und beweglich ist, die parallel zu einer durch die ersten und zweiten magnetischen Mittel (30, 30', 40, 40') ist.

12. Vorrichtung nach Anspruch 11, bei welcher die ersten und zweiten magnetischen Mittel (30, 30') eine Remanenzmagnetisierung gemäß einer in ihrer Ebene enthaltenen Richtung aufweisen, wobei wenigstens eine dieser Magnetisierungen variabel ist.

13. Vorrichtung nach einem der Ansprüche 1 bis 12, bei welcher wenigstens ein magnetisches Mittel mit zu seiner Ebene rechtwinkliger Remanenzmagnetisierung einen Stapel von CoPt Multischichten und wenigstens eine Schicht (34, 34') aus einem antiferromagnetischen Material umfasst und/oder
wenigstens ein magnetische Mittel mit Remanenzmagnetisierung gemäß einer in seiner Ebene enthaltenen Richtung, oder ein magnetisches Mittel mit planarer Magnetisierung, wenigstens eine Schicht (32) aus einem ferromagnetischen Material und wenigstens eine Schicht (34) aus einem antiferromagnetischen Material umfasst.

14. Vorrichtung nach einem der Ansprüchen 1 bis 13, in welcher wenigstens eines der genannten ersten oder zweiten magnetischen Mittel einen Stapel von Schichten umfasst, beispielsweise eine Wechselfolge von wenigstens einer magnetischen Schicht (F) und wenigstens einer antiferromagnetischen Schicht (AF).

15. Vorrichtung nach einem beliebigen der vorhergehenden Ansprüche, bei welcher wenigstens eines der genannten ersten oder zweiten magnetischen Mittel eine reversible Magnetisierung umfasst und Mitteln (36, 37) zur Umkehrung der Magnetisierung zugeordnet ist.
